# EUROPEAN PATENT APPLICATION

(11) **EP 1 538 625 A2**
(43) Date of publication of application: **08.06.2005**
(21) Application number: 04257044.0
(22) Date of filing: 12.11.2004
(51) Int. Cl.: G11B 27/00

(54) **Information provision apparatus, information reproducing apparatus, information provision method, and information recording medium on which information provision program is computer-readably recorded**

(30) Priority: 04.12.2003 JP 2003406088
(71) Applicant: Pioneer Corporation, Tokyo-to (JP)
(72) Inventor: Kawaguchi, Tomoyuki Pionner Corporation, Tsurugashima-shi Saitama-ken (JP); Hosoi, Masayuki Pionner Corporation, Tsurugashima-shi Saitama-ken (JP)
(74) Representative: Townsend, Victoria Jayne

(57) **Abstract**

The broadcast receiving and recording apparatus (4a to 4c, 4) is provided with: the recording device (36, 39) on which the received broadcast contents data (referred to "contents data" hereinafter) and metadata indicating attributes of the contents data can be recorded; the input unit (49) which selects the contents data with respect to which reproduction or information provision is to be performed; the network interface (50) which acquires control information used for controlling reproduction and recording of the contents data; and the CPU (46) which performs reproduction of the contents data, provision of information related to the contents data, or provision of history information indicating edit history regarding the contents data, based on presence of the recorded contents data in the recording device (36, 39), the control information and the metadata.

## Description

### BACKGROUND OF THE INVENTION

### 1. Field of the Invention

The present invention relates to a technical field of an information provision apparatus, an information reproducing apparatus, an information provision method, and an information recording media on which an information provision program is computer-readably recorded, each providing contents data which are recorded by using control data for controlling at least any one of reproduction and recording of the contents data provided by a contents data provider.

### 2. Description of the Related Art

In recent years, a hard disk recorder which records broadcast contents, etc. on a hard disk has been put on the market and its use is spreading. The hard disk recorder has a function of recording broadcast contents being broadcast as they are and enabling a user to view the contents at any desired time. In addition, since the hard disk recorder employs a hard disk as a recording medium, random access is made easier compared with a magnetic tape, making it possible to perform editing so that only one part of images from broadcast contents is properly selected and reproduced.

On the other hand, digital broadcasting systems have been in operation in which digitized TV signals are transmitted via artificial satellites such as a broadcasting satellite and communication satellite so that each household receives the signals to view TV programs. In such systems, many broadcast channels can be provided; and therefore a great many programs can be broadcast.

In such systems, program information indicating broadcast contents of many programs, for example, data (referred to below as "metadata") describing predetermined information regarding the broadcast contents data, such as program service information (referred to below as "SI (Service Information) information") for BS (Broadcasting Satellite) digital broadcasting or CS (Communication Satellite) digital broadcasting, is transmitted from a satellite to a TV broadcast receiver of each household along with video and audio information (referred to below as "video and audio data") of a TV program.

Each TV broadcast receiver which receives the broadcast contents data transmitted by this system outputs video and audio data onto a TV display and at the same time extracts and uses the metadata to provide various services for users.

As a contents data provision apparatus, such as a broadcast receiving and recording apparatus which provides the contents data by use of metadata indicating attributes and control information of the contents data, there has hitherto been known an apparatus disclosed in US Patent Publication No. US 2003/0012549 A1.

According to the contents data provision apparatus disclosed in the above-mentioned US Patent Publication Document, apart from metadata indicating attributes of broadcast program contents data, such as SI information, edit information corresponding to an editing operation, which information is obtained at a time when broadcast contents data received according to a user instruction is edited, is registered as the metadata via a network in a database which a server is provided with.

In addition, the contents data provision apparatus receives the metadata having the edit information registered by another user via a network from the above server, so that the contents data corresponding to the metadata received and recorded in advance is reproduced by use of the received metadata. Thus, it is possible to provide the broadcast contents according to the metadata registered by another user.

In this case, advertising images are added to the metadata sent from a video database of the above server.

However, according to the prior art contents data reproducing apparatus described above, the metadata described above is distributed for common use on a network. Thus, it is not possible for the metadata to have information peculiar to each user, such as information prescribing an edit operation peculiar to a user of contents data. Consequently, contents data cannot be provided using information peculiar to a user.

Furthermore, according to the prior art apparatus, only sections to be reproduced and reproduction orders of contents data are prescribed by metadata. Thus, only details and a reproduction method of contents data are utilized based on the metadata, so that other information regarding the contents data, such as evaluation of the contents data cannot be known.

### SUMMARY OF THE INVENTION

To address the problem described above, an object of the present invention is to provide an information provision apparatus, an information reproducing apparatus, an information provision method, and an information recording media on which an information provision program is computer-readably recorded, in which there can be provided not only details of contents data and a reproduction method of the contents data but also at least any one of related information and edit history information of the contents data.

The present invention will be described below. Although reference numerals in the accompanying drawings will be accessorily written as parenthetic numerals for descriptive convenience, the present invention is not limited to the illustrated features.

The above obj ect of the present invention can be achieved by an information provision apparatus (4a to 4c, 4) provided with: a recording device (36, 39) on which contents data and attribute data indicating attributes of the contents data can be recorded; a selecting device (49) which selects contents data with respect to which at least any one of reproduction and information provision is to be performed; an acquiring device (50) which acquires control information used for controlling reproduction and recording of the selected contents data; and a reproduction and provision device (44, 45, 46) which performs, based on presence of the recorded contents data on the recording device (36, 39), the control information, and the attribute data, at least any one of reproduction of the contents data, provision of related information related to the contents data, and provision of history information indicating edit history regarding the contents data.

The above object of the present invention can be achieved by an information reproducing apparatus (4a to 4c, 4) provided with: a recording device (36, 39) on which contents data, local metadata which a user uniquely uses among metadata describing predetermined information regarding the contents data, and public metadata except the local metadata among the metadata can be recorded; a selecting device (49) which selects contents data with respect to which at least any one of reproduction and information provision is to be performed; an acquiring device (50) which acquires control information regarding the public metadata, the control information being used for controlling reproduction and recording of the selected contents data; and a reproduction device (46) which performs reproduction of the contents data, based on presence of the recorded contents data on the recording device (36, 39), the control information, and the local metadata.

The above obj ect of the present invention can be achieved by an information provision method provided with the processes of: recording contents data and attribute data indicating attributes of the contents data; selecting contents data with respect to which at least any one of reproduction and information provision is to be performed; acquiring control information used for controlling reproduction and recording of the selected contents data; and performing, based on presence of the recorded contents data in the recording process, the control information, and the attribute data, at least any one of reproduction of the contents data, provision of related information related to the contents data, and provision of history information indicating edit history regarding the contents data.

The above obj ect of the present invention can be achieved by an information recording medium on which an information provision program for providing contents data is recorded so as to be readable through a computer, wherein the information provision program enables the computer to function as: a recording device (36, 39) on which contents data and attribute data indicating attributes of the contents data can be recorded; a selecting device (49) which selects contents data with respect to which at least any one of reproduction and information provision is to be performed; an acquiring device (50) which acquires control information used for controlling reproduction and recording of the selected contents data; and a reproduction and provision device (44, 45, 46) which performs, based on presence of the recorded contents data on the recording device (36, 39), the control information and the attribute data, at least any one of reproduction of the contents data, provision of related information related to the contents data, and provision of history information indicating edit history regarding the contents data.

### BRIEF DESCRIPTION OF THE DRAWINGS

FIG. 1 is a block diagram showing an exemplary general configuration of an information reproduction apparatus according to the present embodiment;
FIG. 2 is a block diagram showing the configuration of the server shown in FIG. 1;
FIG. 3 is a block diagram showing the configuration of the broadcast receiving and recording apparatus shown in FIG. 1;
FIG. 4 is an explanatory diagram showing exemplary broadcast contents;
FIG. 5 is an explanatory diagram showing a general structure of public metadata of broadcast contents;
FIG. 6 is an explanatory diagram showing details of the public metadata;
FIG. 7 is an explanatory diagram showing details of other public metadata;
FIG. 8 is an explanatory diagram showing details of still other public metadata;
FIG. 9 is an explanatory diagram showing a general structure of local metadata of broadcast contents;
FIG. 10 is an explanatory diagram showing details of the local metadata;
FIG. 11 is a flowchart showing a process of registering public metadata in the server;
FIG. 12 is a flowchart showing a process of reproducing a preview of a last-week installment in the broadcast receiving and recording apparatus;
FIG. 13 is a flowchart showing a process of displaying a related home page in the broadcast receiving and recording apparatus;
FIG. 14 is a flowchart showing a first process for canceling an edit of public metadata in the broadcast receiving and recording apparatus according to the present invention;
FIG. 15 is a flowchart showing a second process for canceling an edit of public metadata in the broadcast receiving and recording apparatus according to the present invention;
FIG. 16 is an explanatory diagram showing exemplary displayed history information; and
FIG. 17 is an explanatory diagram showing details of the history information after modification.

### DESCRIPTION OF THE PREFERRED EMBODIMENTS

The present invention will be more fully understood from the following description of a preferred embodiment when reference is made to the accompanying drawings.

According to an embodiment described below, each of a plurality of broadcast receiving and recording apparatuses receives broadcast contents and records the received broadcast contents data (referred to simply "contents data" hereafter) onto a built-in hard disk (HD) or optical disk. Based on metadata describing predetermined information, such as contents data attributes, of the contents data, the apparatus records the contents data, reproduces the recorded contents data or provides information related to the contents data.

As described above, regarding metadata describing the predetermined information, the broadcast receiving and recording apparatus generates metadata (referred to below as "local metadata") independently used by each user and at the same time acquires metadata (referred to below as "public metadata") other than the local metadata via a network from a server. The local metadata and the public metadata are recorded on a hard disk or an optical disk incorporated into the broadcast receiving and recording apparatus.

The broadcast receiving and recording apparatus according to the present embodiment is characterized by receiving public metadata via a network and combining the public metadata with the generated local metadata described above to thereby reproduce and record contents data, or provide information related to the contents data.

According to the broadcast receiving and recording apparatus, local metadata is recorded on a built-in hard disk or an optical disk, and is read out from the built-in hard disk or the optical disk when public metadata is used. In the embodiment described below, however, an example will be described in which local metadata is recorded on a built-in hard disk, and read out from the built-in hard disk when public metadata is used.

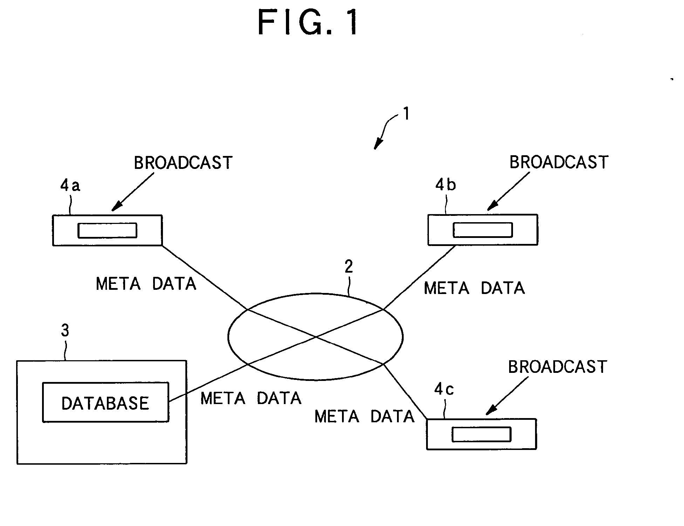

First an overall configuration of an information provision system according to the present embodiment, which system includes the broadcast receiving and recording apparatus and a server providing public metadata, will be described with reference to FIG. 1.

FIG. 1 is a block diagram showing an exemplary general configuration of a contents provision system according to the present embodiment.

As shown in FIG. 1, an information reproduction system 1 according to the present embodiment includes a server 3 providing public metadata related to contents data and a plurality of broadcast receiving and recording apparatuses 4a to 4c which receive the contents data and public metadata and provide the contents data according to the contents data or public metadata. The server 3 and the plurality of broadcast receiving and recording apparatuses 4a to 4c are connected to each other via a network 2 such as the Internet.

In the information reproduction system 1 according to the present embodiment, there are a single server 3 and three broadcast receiving and recording apparatuses 4a to 4c. However, the number of these apparatuses connected to each other may be selected arbitrarily.

The server 3 provides public metadata related to any given contents data for each of the broadcast receiving and recording apparatuses 4a to 4c and at the same time receives the public metadata sent from each of the broadcast receiving and recording apparatuses 4a to 4c. Specifically, the public metadata according to the present embodiment is sent or received by the broadcast receiving and recording apparatuses 4a to 4c while including all information.

The server 3 stores the received public metadata into a database described later by associating the public metadata with the contents data.

This public metadata indicates later-described user information, program recording information, material composition information, reproduction control information (management information) , evaluation/statistics information, link information or history information. When the server 3 receives any one of the user information, evaluation/statistics information, reproduction control information, link information or history information, the public metadata to which received information belongs is updated by use of the received information.

Each of the broadcast receiving and recording apparatuses 4a to 4c receives contents data and records the received contents data on a built-in hard disk or an optical disk and at the same time generates local metadata described later corresponding to each of the contents data.

In response to a user instruction, each of the broadcast receiving and recording apparatuses 4a to 4c edits the received contents data to update the local metadata related to the contents data corresponding to the editing, and at the same time generates public metadata having link information related to the above described contents data, evaluation/statistics information such as a contents data evaluating comment or reproduction control information obtained at a time when the contents data is edited.

Each of the broadcast receiving and recording apparatuses 4a to 4c records the generated local metadata on the built-in hard disk or the optical disk and at the same time sends the generated public metadata to the database of the server 3 via the network 2.

Each of the broadcast receiving and recording apparatuses 4a to 4c receives public metadata registered by another user via the network 2 from the server 3 and at the same time reads out local metadata recorded on the built-in hard disk or the optical disk and corresponding to the public metadata, so that the contents data corresponding to the public metadata is reproduced according to the received public metadata and the read local metadata to thereby display various information of the contents data.

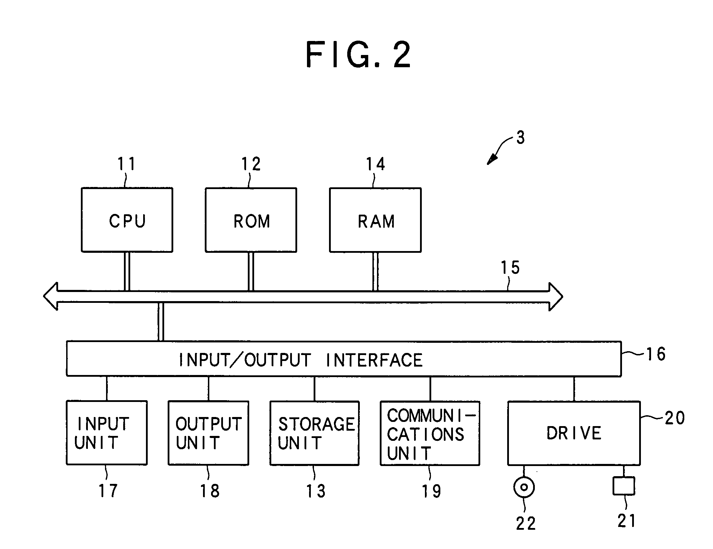

Next, a configuration of the server 3 according to the present embodiment will be described with reference to FIG. 2. FIG. 2 is a block diagram showing the configuration of the server 3 shown in FIG. 1.

As described above, the server 3 according to the present embodiment receives via the network 2 public metadata corresponding to contents data recorded or edited by the broadcast receiving and recording apparatuses 4a to 4c. If the received public metadata is one to be registered anew, then the metadata is stored anew into a data storage unit such as a built-in database. In this case, when the received public metadata has already been stored in the data storage unit, the received public metadata is updated and then stored in the data storage unit so as to update the public metadata.

Specifically, public metadata is sent or received between the server 3 and the broadcast receiving and recording apparatuses 4a to 4c while including all information with respect to the user information, reproduction control information, link information and history information. Regarding public metadata which each user provides by use of the broadcast receiving and recording apparatuses 4a to 4c, the original data recorded in advance and in which there are recorded provided information, such as a relevant program, a relevant WWW (World Wide Web) page, which information serves as link information described later, and edit process of history information, is updated to new data and then recorded onto the server 3.

In the server 3, public metadata are provided by each user from each of the broadcast receiving and recording apparatuses 4a to 4c, which public metadata has user information and reproduction control information with respect to each of the broadcast receiving and recording apparatuses 4a to 4c; the data recorded originally by each user is updated in the server 3. Each user records a recording date and time and a channel in the program recording information, so that each of the broadcast receiving and recording apparatuses 4a to 4c uniquely generates the public metadata.

The public metadata stored in the server 3 of the present embodiment is sent to the broadcast receiving and recording apparatuses 4a to 4c via the network 2 at a request of a user made from the broadcast receiving and recording apparatuses 4a to 4c based on user's instruction.

When sending and receiving public metadata to/from each of the broadcast receiving and recording apparatuses 4a to 4c, the server 3 performs an authentication operation for identifying the broadcast receiving and recording apparatuses 4a to 4c which are permitted to send and receive each public metadata; information required for the authentication operation with respect to each user of the broadcast receiving and recording apparatuses 4a to 4c is registered beforehand with a data storage unit, such as a database, of the server 3.

Specifically, to perform such an operation, as shown in FIG. 2, the server 3 of the present embodiment includes; a CPU (Central Processing Unit) 11 for controlling an operation of each unit at a time when each public metadata is sent or received; a ROM (Read Only Memory) 12 in which there is stored each program used at a time when the public metadata is sent or received; a storage unit 13 composed of recording media such as a hard disk; a RAM (Random Access Memory) 14 in which various data and programs are temporarily stored at a time when the public metadata is sent or received; and an input/output interface 16.

According to the present embodiment, the CPU 11 executes various processes according to programs stored in the ROM 12 or programs loaded from the storage unit 13 to the RAM 14. Data used at a time when the CPU 11 executes various processes, and other data are also stored appropriately in the RAM 14.

The CPU 11, the ROM 12 and the RAM 14 are connected to each other via a bus 15. The storage unit 13 is connected via the input/output interface 16 and the bus 15 to the CPU 11, the ROM 12 and the RAM 14.

In addition, the server 3 of the present embodiment includes: an input unit 17 composed of input interfaces (or operation units) such as a keyboard, mouse, etc.; an output unit 18 composed of an image data display such as a CRT, LCD, etc. and a loudspeaker which outputs sounds; the storage unit 13, such as a hard disk, for storing data; and a communication unit 19 such as a modem, terminal adaptor, etc. The input unit 17, output unit 18 and communication unit 19 are connected via the input/output interface 16 to the bus 15.

The communication unit 19 performs communication processes with respect to each of the broadcast receiving and recording apparatuses 4a to 4c via the network 2. The communication processes include an authentication process and other processes performed at a time when public metadata is sent or received.

Connected to the input/output interface 16 is a drive 20 in which each program is stored as required which prescribes such operations of each unit as the ones performed at a time when public metadata is sent or received. Recording media, such as an optical disk 22, are appropriately mounted on the drive 20. Thus, according to the present embodiment, computer programs read out from the optical disk 22 according to an instruction of the CPU 11, such as ones for performing the later-described sending and receiving of the public metadata, are installed into the storage unit 13 as required.

Public metadata sent from each of the broadcast receiving and recording apparatuses 4a to 4c is stored into a database 21; according to an instruction of the CPU 11, the received public metadata is recorded onto the database 21 and the public metadata which has been recorded is read out.

In the server 3, new public metadata sent from each of the broadcast receiving and recording apparatuses 4a to 4c is received via the communication unit 19 and recorded onto the database 21. Specifically, regarding all the program recording information, user information, reproduction control information, link information and history information, new public metadata sent from each of the broadcast receiving and recording apparatuses 4a to 4c is received and recorded onto the database 21.

Next, the operation of the server 3 according to the present embodiment will be described below.

Information, such as an ID and a password, required for a authentication process with respect to a user of the broadcast receiving and recording apparatuses 4a to 4c is registered in advance with the database 21 or the optical disk 22 of the server 3. When the CPU 11 can authenticate the user by use of the registered ID and password, the CPU 11 generates a message to inform the user of permission to register public metadata such as the later-described user information, reproduction control information, link information, history information, etc. and sends the message as message information to the broadcast receiving and recording apparatuses 4a to 4c via the communication unit 19.

When the public metadata are sent from the broadcast receiving and recording apparatuses 4a to 4c to the CPU 11 according to the message information thus sent, the CPU 11 receives the public metadata sent via the communication unit 19. At this time, if the received public metadata is new one, then the CPU 11 records the public metadata onto the database 21 via the input/output interface 16 and the drive 20, and if the received public metadata already exists in the database 21, then the CPU 11 overwrites the existing public metadata via the input/output interface 16 and the drive 20.

More specifically, by recording the received public metadata such as user information, reproduction control information, link information, history information, etc. onto the database 21 via the communication unit 19, the CPU 11 incorporates the public metadata sequentially and separately into the database 21.

When desired public metadata to acquire is selected by a user of the broadcast receiving and recording apparatuses 4a to 4c as described below, the server 3 reads out the selected public metadata from the database 21 and sends the metadata to the broadcast receiving and recording apparatuses 4a to 4c via the input/output interface 16, the communication unit 19 and the network 2.

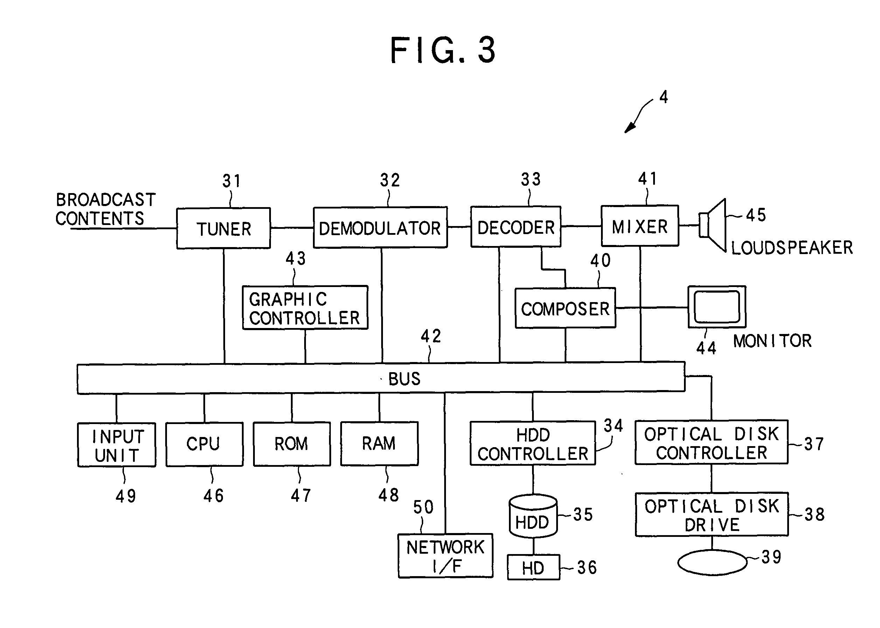

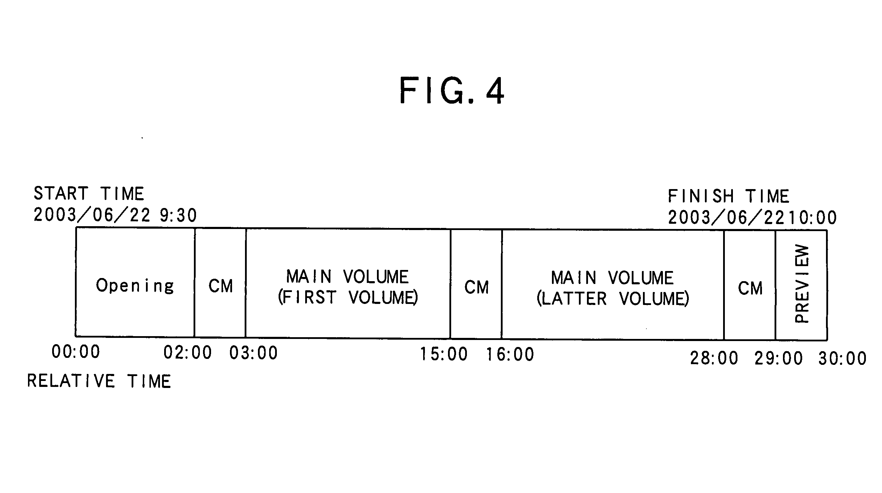

Next, the configuration of the broadcast receiving and recording apparatuses 4a to 4c according to the present embodiment will be described with reference to FIGs. 3 and 4. FIG. 3 is a block diagram showing the configuration of the broadcast receiving and recording apparatus 4 shown in FIG. 1. FIG. 4 is a diagram showing exemplary broadcast contents received by the broadcast receiving and recording apparatus 4. It is noted that when it is not required to distinguish among the broadcast receiving and recording apparatuses 4a to 4c, it is simply referred to as the broadcast receiving and recording apparatus 4.

As shown in FIG. 3, the broadcast receiving and recording apparatus 4 of the present embodiment includes: a tuner 31; a demodulator 32; a decoder 33; a hard disk drive (HDD) controller 34 for controlling a hard disk drive (HDD) 35 having a hard disk (HD) 36 to control recording or reading of data; an optical disk controller 37 for controlling a optical disk drive 38 for housing an optical disk 39, as an example of a removable recording medium according to the present invention, to control recording or reading of data; a composer 40; a mixer 41; and a graphic controller 43. Each of these units is connected to a bus 42.

The tuner 31 receives radio waves containing broadcast contents and outputs a baseband signal to the demodulator 32. The demodulator 32 demodulates the baseband signal output from the tuner 31 and output the resulting signal to the decoder 33.

The decoder 33 decodes a demodulated signal input from the demodulator 32 or a signal read out via the HDD controller 34 and HDD 35 from the HD 36 according to a data format such as MPEG (Moving Picture Expert Group), AC-3 (Audio Coding - 3), etc. and outputs a video signal obtained by the decoding operation to the composer 40 and at the same time outputs an audio signal obtained by the decoding operation to the mixer 41.

Similarly, the decoder 33 decodes a signal read out via the optical disk controller 37 and the optical disk drive 38 from the optical disk 39 according to a data format such as MPEG (Moving Picture Expert Group), AC-3 (Audio Coding-3), etc. and outputs a video signal obtained by the decoding operation to the composer 40 and at the same time outputs an audio signal obtained by the decoding operation to the mixer 41.

The composer 40 superposes a video signal generated and output by the graphic controller 43 on a video signal input from the decoder 33 via the bus 42 as required and outputs the resulting signal to a monitor 44 connected to the outside or provided in the broadcast receiving and recording apparatus 4. The mixer 41 mixes an audio signal supplied from the decoder 33 with another audio signal as required and supplies the resulting signal to a loudspeaker 45 connected to the outside or provided in the broadcast receiving and recording apparatus 4.

When a video signal is input to the monitor 44, images corresponding to the input video signal are output. Simultaneously, when an audio signal is input to the loudspeaker 45, sounds corresponding to the input audio signal are output.

In addition, as shown in FIG. 3, the broadcast receiving and recording apparatus 4 of the present embodiment includes a CPU 46, a ROM 47, a RAM 48, an input unit 49 and a network interface (referred to below as the "network I/F") 50. Each of these units is connected to the bus 42.

The CPU 46 controls each unit of the broadcast receiving and recording apparatus 4 via the bus 42 to allow each unit to execute various processes. Stored in the ROM 47 are programs and parameters required at a time when the CPU 46 executes various processes. Stored in the RAM 48 are programs and data required at a time when the CPU 46 executes various processes.

The CPU 46 records contents data onto the hard disk 36 or the optical disk 39 according to a user instruction input from the input unit 49 as described later and at the same time generates local metadata. In addition, the CPU 46 performs image or audio editing of recorded contents data and at the same time generates public metadata with respect to the contents data.

More specifically, for example, editing windows (contents play list, evaluation/statistics information input text box, etc.) of contents data are displayed on the monitor 44 and a user performs an edit operation of the contents data by use of the input unit 49. Then, the CPU 46 edits the contents data to generate public metadata having the user information, reproduction control information, evaluation/statistics information, link information or history information with respect to the edited contents data.

According to the present embodiment, a user produces contents data composed of a video data serving as an opening of the contents data (referred to below as "opening data"), a video data serving as a main volume (referred to below "main volume data"), a video data serving as a commercial (referred to below "commercial data") and a video data serving as a preview of a succeeding main volume (referred to below as "preview data") and the material composition information thereof. The CPU 46 of the broadcast receiving and recording apparatus 4 generates data regarding a start time and a finish time of the opening data, main volume data, commercial data and preview data, each produced by the user and at the same time generates public metadata along with metadata such as attribute information produced by the user.

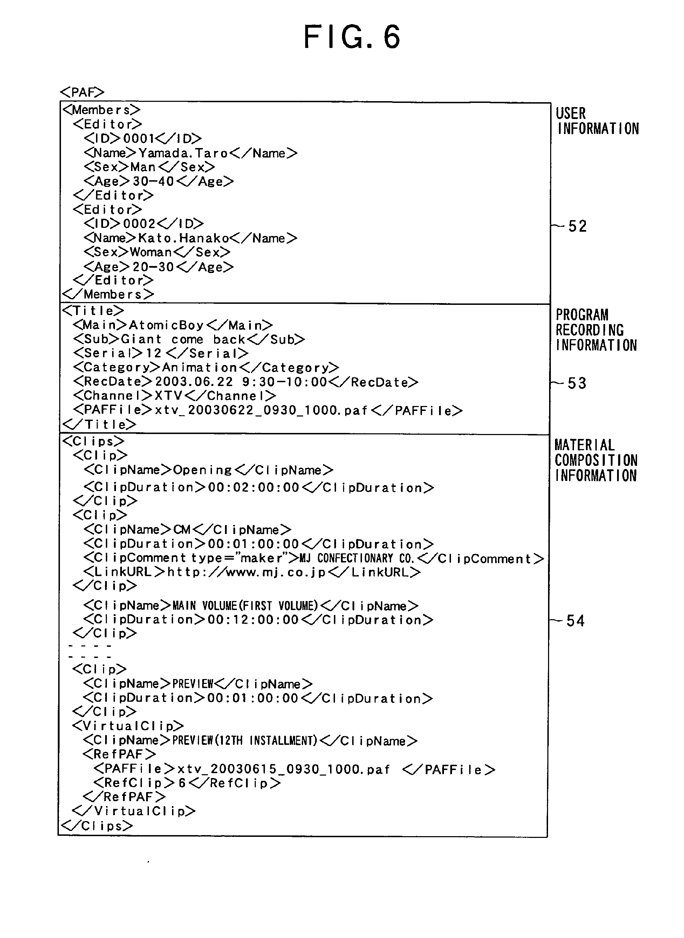

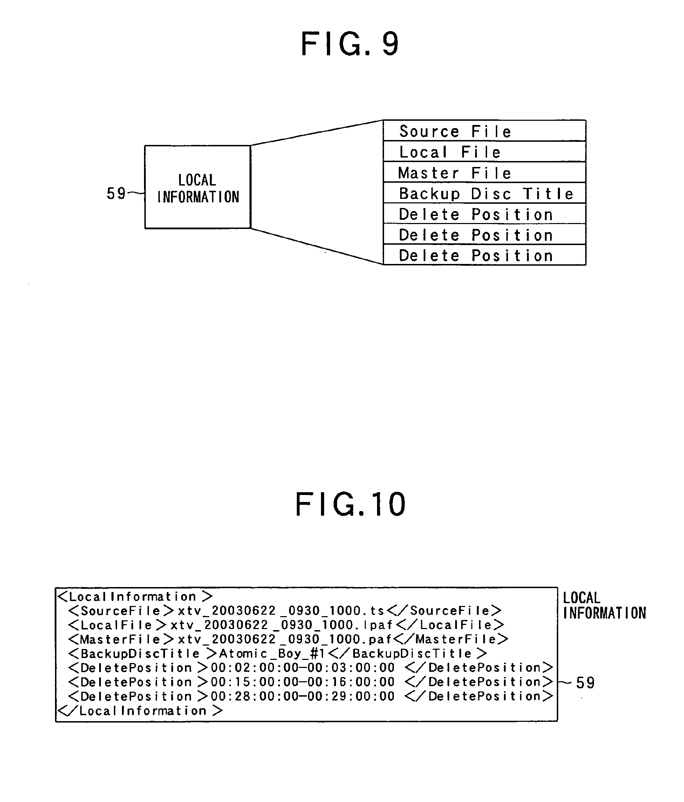

The public metadata thus generated are described by the CPU 46 in an XML (extensible Markup Language) format shown in FIGs. 6 to 8; the public metadata described in the XML format are sent to the server 3. The local metadata is generated in an XML format shown in FIG. 10 when the contents data is recorded.

The details of the received public metadata and generated local metadata will be described later.

In response to a user instruction, the CPU 46 uses public metadata and local metadata to perform special reproduction (referred to below as "special reproduction") of contents data, which special reproduction is associated with contents data which has already been recorded.

For example, there is performed browsing of a home page related to the contents data or acquisition of various data uploaded onto the homepage, digested reproduction or preview reproduction of contents data related to the contents data, as described later.

The input unit 49 is composed of many keys such as various confirmation buttons, operation buttons for inputting each operation instruction, ten keys and other numerical keys, etc. A user manipulates the input unit 49 to perform various operations such as a communication process. Signals corresponding to the operations are output via the bus 42 to the CPU 46.

The network I/F 50 executes the communication process via the network 2 according to an instruction from the CPU 46. At this time, according to the present embodiment, receiving of public metadata stored in the server 3 and sending of public metadata generated by the broadcast receiving and recording apparatus 4 are performed.

The hard disk drive controller 34 controls the hard disk drive 35 to record required data onto the hard disk 36 and read out the recorded data. Similarly, the optical disk controller 37 controls the optical disk drive 38 to record required data onto the optical disk 39 and read out the recorded data.

The CPU 46 according to the present embodiment may constitute a reproduction and provision device, a reproduction device, a deciding device, an information provision device, a control device and a restoration device of the present invention; the input unit 49 may constitute a selecting device of the present invention; the network I/F 50 may constitute an acquiring device of the present invention; the hard disk (HD) 36 or the optical disk 39 may constitute a recording device of the present invention. The monitor 44 and the loudspeaker 45 according to the present embodiment may constitute a reproduction and provision device of the present invention along with the CPU 46; the monitor 44 may constitute a presentation device of the present invention.

Next, the operation of the broadcast receiving and recording apparatus 4 according to the present embodiment will be described.

The input unit 49 is operated by a user of the broadcast receiving and recording apparatus 4 to instruct receiving of contents data of a specified channel. When receiving the instruction from the input unit 49, the CPU 46 controls the tuner 31 to enable the tuner 31 to receive a radio wave of the specified channel contents.

After receiving the radio wave of the specified channel, the tuner 31 outputs the received signal to the demodulator 32. The demodulator 32 demodulates the received signal and outputs the resulting signal to the decoder 33.

The decoder 33 decodes the demodulated signal and outputs the resulting video signal via the composer 40 to the monitor 44 . In addition, the decoder 33 outputs an audio signal via the mixer 41 to the loudspeaker 45.

In this way, when the video signal is output to the monitor 44 and the audio signal to the loudspeaker 45, images corresponding to the video signal are displayed on the monitor 44 and sounds corresponding to the audio signal are reproduced by the loudspeaker 45. Thus, the user of the broadcast receiving and recording apparatus 4 can view broadcast contents of the desired channel.

When an instruction to record the received broadcast contents is issued by the user, the signal output from the decoder 33 is supplied via the hard disk drive controller 34 or the optical disk controller 37 to the hard disk drive 35 or the optical disk drive 38, so that the signal is recorded onto the built-in hard disk 36 or the optical disk 39.

In this case, the CPU 46 can also extract the SI information indicating attributes of the contents data, which SI information is received along with the contents data by the tuner 31, and record the extracted SI information along with the contents data onto the built-in hard disk 36 or the optical disk 39.

This recording operation can be performed while the video signal and audio signal are not output from the monitor 44 or the loudspeaker 45.

A description will be given herein of the contents data recorded onto the built-in hard disk 36 or the optical disk 39 with reference to FIG. 4.

As shown in FIG. 4, the contents data is image data composed of opening data, commercial data (commercial information), main volume data and preview data.

For example, as shown in FIG. 4, when any given contents data is recorded, a user may define a material composition according to the details of the contents data by representing, with reference to a relative time on the basis of a start time of each contents data, opening data as a temporal position from 00:00 to 02:00, the commercial data (commercial information) as a temporal position from 02:00 to 03:00, the main volume (first volume) data as a temporal position from 03:00 to 15:00, the commercial data as a temporal position from 15:00 to 16:00, the main volume (latter volume) data as a temporal position from 16:00 to 28:00, the commercial data as a temporal position from 28:00 to 29:00 and the preview data as a temporal position from 29:00 to 30:00.

The CPU 46 generates later-described material composition information of public metadata in accordance with the material composition having the opening data, the commercial data, the main volume data and the preview data. When reproducing each of the image data stored in the hard disk 36 or the optical disk 39, the CPU 46 can acquire from the material composition information the reproduction position of each image data (opening data, commercial data, main volume data, preview data). For example, the CPU 46 of the present embodiment may specify the reproduction point of each image data by use of a clip number, i.e. a number given in order of contents data appearance.

This clip number, which is applied to the reproduction control information or the material composition information described later, is used at a time of reproduction or special reproduction of the contents data.

The recorded contents data is identified according to the date and time and the channel information obtained at a time when the contents data is recorded. In the contents data shown in FIG. 4, for example, it is indicated that the data is broadcast on XTV channel for 30 minutes from 9:30 June 22, 2003 to 10:00 June 22, 2003. The CPU 46 generates the program recording information and local metadata according to this information.

According to the present embodiment, to generate public metadata of user information, reproduction control information, evaluation/statistics information, link information or history information, a contents data editing window (contents play list, link information input text box, etc.) may be displayed on the monitor 44, so that a user performs an edit operation by use of the input unit 49. Accordingly, the CPU 46 edits the contents data to generate the public metadata of user information, reproduction control information, evaluation/statistics information, link information or history information of the edited contents data.

The CPU 46 sends the generated public metadata of user information, reproduction control information, evaluation/statistics information, link information or history information via the network I/F 50 to the server 3. In this case, the public metadata of user information, reproduction control information, evaluation/statistics information, link information or history information is described by the CPU 46 using a data structure of XML format shown in FIGs. 6 to 8. Accordingly, the public metadata having the data structure of XML format is sent to the server 3. The local metadata generated at the time of recording is recorded onto the built-in hard disk 36 or the optical disk 39.

When an instruction to reproduce contents data recorded on the hard disk 36 or the optical disk 39 is issued according to an operation of the input unit 49, the CPU 46 controls the hard disk drive controller 34 or the optical disk controller 37 to reproduce specified contents data recorded on the hard disk 36 in the hard disk drive 35 or the optical disk 39 in the optical disk drive 38.

When an instruction to perform special reproduction of contents data recorded on the hard disk 36 or the optical disk 39 is issued according to an operation of the input unit 49, the CPU 46 acquires public metadata of the contents data via the network I/F 50 and according to the link information of the acquired public metadata controls the hard disk drive controller 34 or the optical disk controller 37 to decide whether there is recorded contents data related to the contents data on the hard disk 36 or the optical disk 39. The CPU 46 performs the special reproduction of the contents data according to a result of the decision.

More specifically, to display a home page related to the contents data according to the acquired link information, the CPU 4 6 acquires a home page address described in the acquired link information and establishes a connection with the acquired home page address via the network I/F 50. Various information of the home page obtained by the connection is output to the monitor 44 via the composer 40 and to the loudspeaker 45 via the mixer 41.

In this case, ahead of the reproduction of the contents data, it is possible to acquire or browse, according to an operation of the input unit 49, various information including video or audio information, etc. uploaded onto the home page, for example, commercial information of the contents data, information related to characters appearing on the contents data or information related to a making such as a production scene of the contents data.

To reproduce contents data to be reproduced for the special reproduction according to the acquired link information, the CPU 46 decides whether the relevant contents data is recorded on the hard disk 36 or the optical disk 39. If so, then the CPU 46 acquires the public metadata of the relevant contents data described in the acquired link information and according to the public metadata, controls the hard disk drive controller 34 or the optical disk controller 37 to reproduce the relevant contents data.

When the specified contents data is reproduced, the contents data output from the hard disk 36 or the optical disk drive 38 is decoded by the decoder 33 and then the video signal in the contents data is output via the composer 40 to the monitor 44 and at the same time the audio signal in the contents data is output via the mixer 41 to the loudspeaker 45.

Similarly to when contents data of a specified channel is viewed, the video signal is output to the monitor 44 and the audio signal is output to the loudspeaker 45. Thus, images corresponding to the video signal are displayed on the monitor 44 and sounds corresponding to the audio signal are reproduced from the loudspeaker 45, allowing the user of the broadcast receiving and recording apparatus 4 to view the desired contents data.

According to a user instruction, the broadcast receiving and recording apparatus 4 edits contents data recorded on the hard disk 36 or the optical disk 39 as required and records the edit condition as local metadata onto the hard disk 36 or the optical disk 39. On the other hand, the public metadata is sent to the server 3.

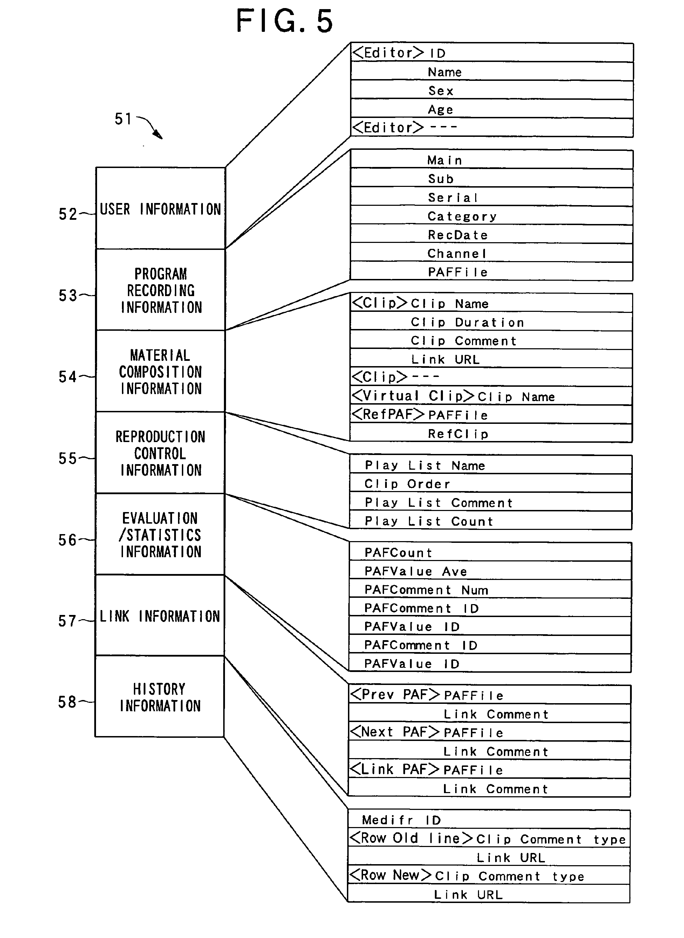

Next, public metadata and local metadata received by the broadcast receiving and recording apparatus 4 will be described with reference to FIGs. 5 to 10.

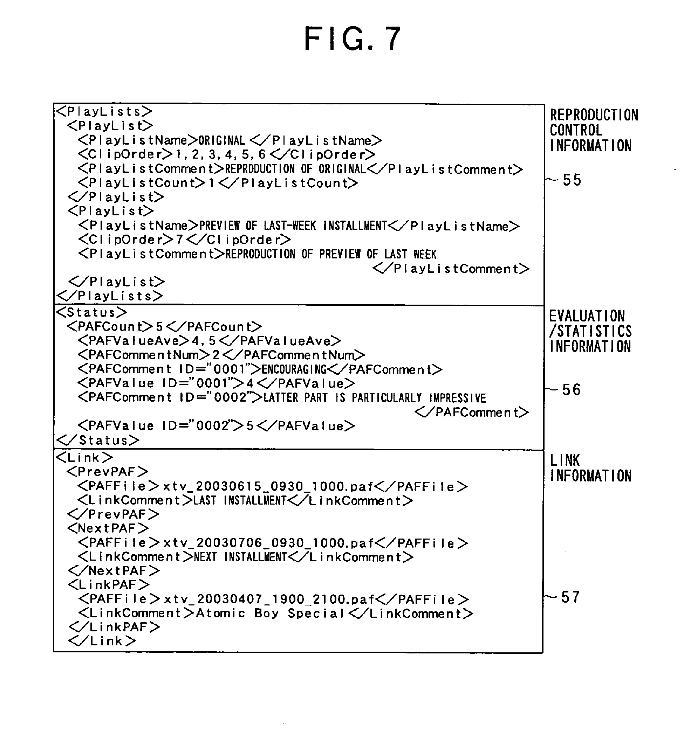

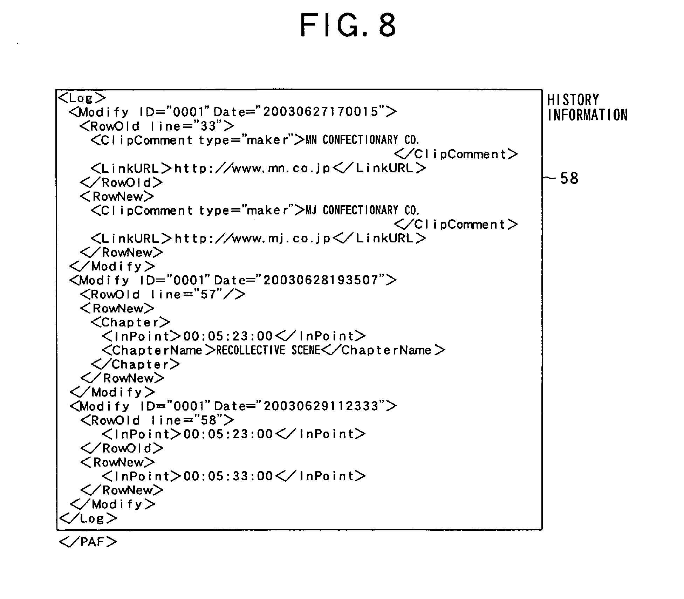

FIG. 5 is an explanatory diagram showing a general structure of public metadata of broadcast contents. FIG. 6 is an explanatory diagram showing the details of the public metadata. FIG. 7 is an explanatory diagram showing the details of other public metadata. FIG. 8 is an explanatory diagram showing details of still other public metadata. FIG. 9 is an explanatory diagram showing a general structure of local metadata of broadcast contents. FIG. 10 is an explanatory diagram showing details of the local metadata.

As shown in FIG. 5, public metadata 51 includes: information regarding a user which edited contents data (referred to below as "user information") 52; information indicating attributes of the contents data (referred to below as "program recording information") 53; information regarding materials of the contents data, such as video data (referred to below as "material composition information") 54; information for reproduction control obtained by editing the contents data (referred to below as "reproduction control information") 55; information indicating evaluation/statistics given by each user of the contents data (referred to below as "evaluation/statistics information") 56; information related to the contents data (referred to below as "link information") 57; and information indicating edit history of the contents data (referred to below as "history information") 58.

Recorded into the user information 52 shown in FIG. 5 is information regarding an editor which edited contents data to which the public metadata belongs or a plurality of users which evaluated the contents data. Specifically, an <ID> tag (individual authentication) serving as identifying information for identifying a name of an editor or a user which performed evaluation (the <Editor> (editor)), a <Name> tag (name) indicating the name, a <Sex> tag (sex) indicating the sex and an <Age> tag (age) indicating the age are described, respectively. More specifically, such information as information for identifying a user which edited the contents data and provided information used for editing, such as the reproduction control information 55 and information regarding the name, sex and age of an editor which edited the contents data is described in the user information 52. The identifying information is also used to specify a user which made an opinion or an evaluation on a program.

For example, as shown in FIG. 6, the user information 52 may have user information regarding two editors. In this case, recorded in the user information 52 shown in FIG. 6 are 0001 in the <ID> tag (individual authentication) of the <Editor> tag (editor) , Yamada. Taro in the <Name> tag (name) , Man (male) in the <Sex> tag (sex) and 30 - 40 in the <Age> tag (age) as well as 0002 in the <ID> tag (individual authentication) of the <Editor> tag (editor), Kato. Hanako in the <Name> tag (name) , Woman (female) in the <Sex> tag (sex) and 20 - 30 in the <Age> tag (age).

By acquiring the user information 52, the broadcast receiving and recording apparatus 4 can specify any given user by use of the user information 52. Therefore, it is possible to acquire public metadata regarding various contents data, such as a list of contents data which have been edited by the specified user, a list of opinions on various contents data made by the user, etc.

Described in the program recording information 53 as information for specifying the contents data to which the public metadata belongs is such information as a title of a recorded program, recording data, recording channel, etc. More specifically, such information as a <Main> tag (main title) indicating the title of the contents data to which the public metadata belongs, a <Sub> tag (subtitle) indicating, if there is a subtitle, the subtitle, a <Serial> tag (serial number) indicating a serial number of a serial drama, a <Category> tag (category) indicating a genre of the contents data, a <RecDate> tag (recording data) indicating a broadcast time and date of the contents data, a <Channel> tag (recording channel) indicating a broadcast channel of the contents data and a <PAFFile> tag (file name) indicating a file name of the public metadata of the contents data is described.

For example, as shown in FIG. 6, the program recording information 53 may have Atomic Boy in the <Main> tag (main title), Giant come back in the <Sub> tag (subtitle), 12 in the <Serial> tag (serial number) , Animation in the <Category> tag (category), 2003.06.22 09:30-10:00 in the <RecDate> tag (recording date) , XTV in the <Channel> tag (recording channel) and xtv_20030622_0930_1000.paf in the <PAFFile> tag (file name).

In the broadcast receiving and recording apparatus 4, the use of the program recording information 53 enables displaying of programs recorded on the server 3 for each broadcast date, each title and each genre and also enables retrieval of programs according to the above information serving as a keyword.

The program recording information 53 is basically similar to the above described SI information, specifying contents data and indicating information regarding the attributes.

Described in the material composition information 54 is information for specifying video information containing actual audio information of the contents data to which the public metadata belongs. Specifically, a <ClipName> tag indicating a name of the video information, a <Clip Duration> tag indicating time information of the video information, a <ClipComment> tag indicating a comment of the video information, a <LinkURL> tag indicating URL (Uniform Resource Locator) related to the contents data, a <VirtualClip> tag indicating video information regarding other relevant contents data, a <ClipName> tag indicating a name of video information with respect to other relevant contents data, a <RefPAF> tag indicating public metadata related to the contents data, a <PAFFile> tag (file name) indicating a file name of other relevant public metadata and a <RefClip> tag indicating a position of description of clip information having the file name are described.

More specifically, a name for specifying video information such as an opening, commercial message (CM) , main volume and preview of a recorded program is described in the <ClipName>; a recording time of the video information in the <ClipDuration>; for example, a name of a program sponsor of the recorded program in the <ClipComment>; and WWW page of the sponsor in the <LinkURL>.

A name indicating a preview of a latest recorded contents data is described in the <ClipName> of the <VirtualClip> tag; a file name of the public metadata in the <PAFFile> of the <RefPAF> tag; and a position of description of clip information having the file name in the <RefClip> tag.

For example, in the case of the contents data shown in FIG. 4, the material composition information 54 has Opening in the <ClipName>, 00:02:00:00 in the <ClipDuration> tag, CM in the <ClipName>, 00:01:00:00 in the <ClipDuration> tag, MJ Confectionary co. as a program sponsor in the <ClipComment> tag and http://www.mj. co. jp as WWW page of the sponsor in the <LinkURL> tag, as shown in FIG. 6. Accordingly, as shown in FIG. 4, regarding this video information, it is indicated that the temporal position from 00:00 to 02:00 corresponds to the video information of the opening and the temporal position from 02:00 to 03:00 corresponds to the commercial data (commercial information).

In addition, Preview (12^{th}) as a name of a preview of a latest recorded contents data is described in the <ClipName> tag of the <VirtualClip> tag; xtv_20030615_0930_1000.paf as a file name of the public metadata into the <PAFFile> tag of the <RefPAF> tag; and "6" as a position of description of clip information having the file name in the <RefClip> tag. Specifically, using the <VirtualClip> tag, the material composition information 54 indicates that material composition information of another public metadata is to be accessed, andhas information for reproducing a latest recorded preview by use of the <PlayList> tag in the later-described reproduction control information.

In addition, main volume (first volume), main volume (latter volume), commercial and preview are also described in the same material composition information 54.

Each video information described in the material composition information 54 of the present embodiment may be composed of not only a group of video information for each division such as opening, commercial, etc. but also a group of further subdivided video information such as a chapter.

Described in the reproduction control information 55 is information regarding the contents data to which the public metadata belongs, which information indicates reproduction order with respect to data which the user described in the user information 51 indicates by use of the material composition information 54 of the contents data. Specifically, the <PlayListName> tag (reproduction name) indicating a name of reproduction control information of the edited contents data, a <ClipOrder> tag (reproduction order) indicating reproduction order of the material composition information 54 related to the contents data, a <PlayListComment> tag (reproduction comment) indicating comment information provided by an editor and used to reproduce the edited contents data and a <PlayListCount> tag (reproduction count) indicating a number of reproduction times with respect to the edited contests data are described in the reproduction control information 55.

In the reproduction control information 55, a program reproduction method is described using the tags described in the material composition information 54.

For example, as shown in FIG. 7, the reproduction control information 55 may have Original in the <PlayListName> tag (reproduction name), "1, 2, 3, 4, 5, 6" in the <ClipOrder> tag (reproduction order), original reproduction in the <PlayListComment> tag (reproduction comment) and "1" in the <PlayListCount> tag (reproduction count). This means that the data indicated by the material composition information 54 is to be reproduced from the beginning to the end and that the number of reproduction times with respect to the reproduction control information is currently one.

Described in the evaluation/statistics information 56 are an opinion and an evaluation regarding the contents data to which the public metadata belongs, a number of usage times regarding metadata of the broadcast contents and information regarding evaluation and statistics of a user, such as evaluation and comments with respect to the user which made an opinion and evaluation on the program.

Specifically, the evaluation/statistics information 56 has the <PAFCount> tag (number of access times regarding metadata of broadcast contents) indicating a number of access times by a user regarding the public metadata the <PAFValueAve> tag (evaluation average value) indicating an later-described average value given on a five scale evaluation by a user of the program, the <PAFCommentNum> tag (pair number of comment and evaluation information) indicating a pair number of user comments and evaluation information made on the contents data the <PAFComment> tag (program comment made by a user corresponding to a authentication number) indicating a comment on the contents data made by a user corresponding to a authentication number and the <PAFValue> tag (evaluation made by a user corresponding to a authentication number) indicating five-scale evaluation on the program made by a user corresponding to a authentication number.

For example, as shown in FIG. 7, as text information, the evaluation/statistics information 56 may have "5" in the <PAFCount> tag (number of access times regarding metadata of broadcast contents), "4.5" in the <PAFValueAve> tag (evaluation average value), "2" in the <PAFCommentNum> tag (pair number of comment and evaluation information), the "encouraging" as a comment made by a user having ID0001 in the <PAFComment> tag (program comment made by a user corresponding to a authentication number) , the evaluation "4" made by the user having ID0001 in the <PAFValue> tag (evaluation made by a user corresponding to a authentication number) , "the latter part is particularly impressive" as a comment made by a user having ID0002 in the <PAFComment> tag (program comment made by a user corresponding to a authentication number) and the evaluation "5" made by the user having ID0002 in the <PAFValue> tag (evaluation made by a user corresponding to a authentication number).

The acquisition of the evaluation/statistics information 56 allows the broadcast receiving and recording apparatus 4 to provide the evaluation/statistics information 56 for a user, as described later. Accordingly, a user can know evaluation and popularity of a program and at the same time join the discussion. Since the <PAFcount> tag of the evaluation/statistics information 56 indicates a number of access times with respect to the public metadata, a user can have a knowledge of popularity of a program.

Described in the link information 57 are link information regarding public metadata of a program related to the contents data, link information regarding related WWW (World Wide Web) pages and link information such as information required for special reproduction of the contents data.

Specifically, the link information 57 has the <PAFFile> in the <PrevPAF> tag (file name of public metadata of contents data provided and recorded in a last installment) regarding contents data corresponding to the public metadata and provided and recorded in a last installment in a case where the contents data corresponding to the public metadata is a serial program which represents a subject in multiple installments (simply a "serial program" hereafter), the <LinkComment> tag indicating a comment on contents data provided and recorded in a last installment, the <PAFFile> tag in the <NextPAF> tag (file name of public metadata of contents data provided in a next installment) regarding contents data provided in a next installment, the <LinkComment> tag indicating a comment on contents data provided in a next installment, the <PAFFile> tag in the <LinkPAF> tag (file name of public metadata of contents data related to the contents data corresponding to the public metadata) regarding contents data related to the contents data corresponding to the public metadata and the <LinkComment> tag indicating a comment on the related contents data.

Specifically, a user can acquire contents data of a serial program, which was provided and recorded in a last installment, by use of the <PrevPAF> tag in the link information 57, and acquire contents data of a serial program, which was provided and recorded in a succeeding, by use of the <NextPAF> tag, and also acquire related contents data such as a special program, which is related to the serial program and provided in a single installment, by use of the <LinkPAF> tag.

For example, as shown in FIG. 7, the link information 57 may have xtv_20030615_0930_1000.paf in the <PAFFile> tag (file name) of the <PrevPAF> tag regarding contents data provided and recorded in a last installment, "last installment" in the <LinkComment> tag indicating a comment on contents data provided and recorded in a last installment, xtv_20030706_0930_1000.paf in the <PAFFile> tag (file name) in the <NextPAF> tag regarding contents data provided and recorded in a next installment, "next installment" in the <LinkComment> tag indicating a comment on contents data provided in a next installment, xtv_20030407_1900_2100.paf in the <PAFFile> tag (file name) in the <LinkPAF> tag regarding related contents data and "Atomic Boy Special" in the <LinkComment> tag indicating a comment on related contents data.

The acquisition of the link information 57 allows the broadcast receiving and recording apparatus 4 to provide the link information 57 for a user. Accordingly, by use of the link information 57, a user can access video and audio information related to contents data provided in a last installment with respect to a serial program such as a serial drama, or browse a home page related to the program. In addition, a user can reproduce only a preview of a serial program such as a serial drama by accessing contents data of another related program or reproduce an outline of a last program by performing digested reproduction.

History of editing applied to public metadata of a program related to the contents data is recorded in the history information 58; each edit history is described in Modify tag. Specifically, a position of an edited part with reference to a head of a text file and contents before and after editing are described; only latest edit information is described in the actual edited part.

Specifically, the history information 58 has the <Modify> tag (edit information) indicating an edit date and time of the public metadata and identifying information of an editor, the <RowOLD> tag (information before editing) indicating a line number of an edited part with reference to a head of a text file of the contents data and data before editing and the <RowNew> tag (information after editing) indicating contents of the public metadata after editing. Specifically, data before and after editing with respect to a part to be edited are described in the <RowOLD> tag and the <RowNew> tag, respectively.

For example, as shown in FIG. 8, the history information 58 may have ID0001 as an user ID of an editor and 20030627170015 as an edit date and time in the <Modify> tag (edit information), "33^{rd} " line with reference to a head of a file in the <RowOldl> tag (information before editing) , MN Confectionary co. (data before editing) as a name of a program sponsor in the <ClipComment> tag, http://www.mn.co.jp as WWW page of the sponsor in the <LinkURL> tag. In addition, in the <RowNew> tag (information after editing), MJ Confectionary co. (information after editing) as a name of a program sponsor is described in the <ClipComment> tag; http://www.mj.co.jp as WWW page of the sponsor is described in the <LinkURL> tag. Furthermore, there is described (1) edit history regarding a case where the same user added a new chapter having "recollective scene" as the <ChapterName> to a "57^{th}" line with reference to a head of a file at "20030628193507" (edit date and time) with Inpoint set to "00:05:23:00" and (2) edit history regarding a case where the same user changed the chapter InPoint previously set at "58^{th}" line by the same user from "00:05:23:00" to "00:05:33:00" at "20030629112333" (edit date and time).

The acquisition of the history information 58 allows the broadcast receiving and recording apparatus 4 to provide the history information 58 for a user as described later. Accordingly, by utilizing the history information 58 for displaying of edit history and restoration of edit details, a user can view edit process and restore edit condition to a previous one. Moreover, when each user sends and receives via the server 3 the history information 58 as public metadata, the edit process can be shared among the users.

As shown in FIGs. 9 and 10, local information 59 makes up local metadata. Various information such as a file name of contents data recorded in the broadcast receiving and recording apparatus 4, information indicating edit details of the contents data, etc. is recorded in the local information 59, which is utilized by a user to associate the contents data recorded on the hard disk 36 with public metadata recorded on the server 3.

When a user records a program onto the optical disk 39, as an example of a removable recording medium according to the present invention, information regarding a title name given to the optical disk so that the optical disk 39 can be specified is described in the local information 59. In addition, when a user performs editing of a program recorded on the hard disk 36, such as deleting a commercial, by use of the <DeletePosition> tag and there arises a difference from metadata recorded on the server 3, information for correcting the difference is described in the local information 59.

Specifically, described in the local information 59 are the <SourceFile> tag (file name of recorded contents data) , the <LocalFile> tag (file name of the local information itself) , the <MasterFile> tag (file name of public metadata on the server 3, corresponding to the local information), the <BackupDiscTitle> tag (title given to identify an optical disk in a case where a backup is made to the optical disk 39) and the <DeletePosition> tag (deleted part).

More specifically, described in the local information 59 are a file name of broadcast contents on a hard disk, a title given to an optical disk in a case where the broadcast contents are backed up to the optical disk and information, such as a production date, independently used by each user.

For example, as shown in FIG. 10, the local information 59 may have xtv_20030622_0930_1000. ts in the <SourceFile> tag (recording file name), xtv_20030622_0930_1000. lpaf in the <LocalFile> tag (local file) , xtv_20030622_0930_1000. paf in the <MasterFile> tag (master file), Atomic_Boy_#1 in the <BackupDiscTitle> tag (title given to identify an optical disk in a case where a backup is made to the optical disk 39) and 00: 02:00: 00-00: 03: 00: 00 in the <DeletePosition> tag (deleted part).

The information (00:02:00:00-00:03:00:00) described in the <DeletePosition> tag (deleted part) indicates that the commercial data (commercial information) having a temporal position of 02:00 to 03:00 shown in FIG. 4, was deleted.

According to the local information 59, program contents data recorded by a user onto the hard disk 36 can be associated with metadata of the broadcast contents on the server 3. When a user backs up program contents data to the optical disk 39, title information used to specify the optical disk 39 is displayed on the monitor 44.

In this way, when the broadcast receiving and recording apparatus 4 uses metadata, local information 59 is read out from the built-in hard disk 36 or the optical disk 39, and is used along with public metadata when the public metadata other than the local information 59 is received via the network 2 by the server 3. Since the local information 59 is information specific to a user, it is stored independently into each of the broadcast receiving and recording apparatus 4.

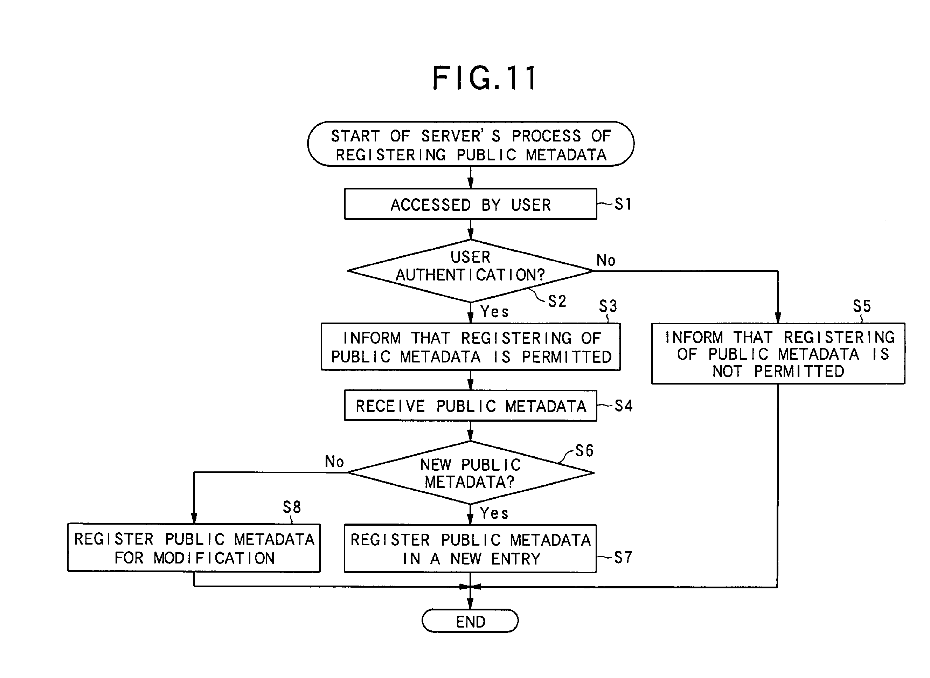

Next, a description will be given of a process of registering with the server 3 public metadata generated by the broadcast receiving and recording apparatus 4 with reference to FIG. 11.

FIG. 11 is a flowchart showing a process of registering public metadata in the server.

As shown in FIG. 11, in Step S1, when being accessed by the broadcast receiving and recording apparatus 4 via the communication unit 19, the CPU 11 of the server 3 reads out a message window for requesting sending of an ID and a password stored in the storage unit 13 and then sends the message window information from the communication unit 19 to the broadcast receiving and recording apparatus 4 via the network 2.

At this time, in the broadcast receiving and recording apparatus 4, the message window is displayed on the monitor 44 to prompt a user to input a user ID and a password. When the ID and the password are input by the input unit 49 of the broadcast receiving and recording apparatus 4, the input ID and the password are sent to the server 3 by the network I/F 50 via the network 2.

Then, when the ID and the password sent from the broadcast receiving and recording apparatus 4 are received, the CPU 11 performs user authentication via the broadcast receiving and recording apparatus 4a and communication unit 19 (Step S2).

Specifically, when receiving the ID and the password from the broadcast receiving and recording apparatus 4 via the communication unit 19, the CPU 11 compares the ID and the password with a user ID and a password stored in advance in the database 21.

The ID and the password sent from the broadcast receiving and recording apparatus 4 are compared with the user ID and the password stored in advance in the database 21, and if these data corresponds with each other (Step S2; YES) , then the CPU 11 decides that the user operating the broadcast receiving and recording apparatus 4 has been authenticated, and the flow proceeds to Step S3 in which the CPU 11 generates a message of permitting registering of public metadata and send it via the communication unit 19 to the broadcast receiving and recording apparatus 4.

At this time, in response to the message of permitting registering of public metadata, public metadata is sent from the broadcast receiving and recording apparatus 4 to the CPU11; the CPU 11 receives the public metadata via the communication unit 19 (Step S4).

On the other hand, if the ID and the password sent from the broadcast receiving and recording apparatus 4 does not corresponds with an ID and a password stored in advance in the storage unit 13 (Step S2; NO), then the CPU 11 decides that that the user operating the broadcast receiving and recording apparatus 4a cannot be authenticated and generates a message of not permitting registering public metadata and sends the massage to the broadcast receiving and recording apparatus 4a via the communication unit 19 (Step S5).

When receiving the public metadata (Step S4), the CPU 11 of the server 3 decides whether the received public metadata is new one (Step S6). If so (Step S6; YES), then the CPU11 registers the public metadata in a new entry (Step S7). On the other hand, if not (Step S6; NO) , then the CPU 11 registers the public metadata for modification (Step S8).

Regarding registering of the public metadata in a new entry or for modification, when data in the XML format shown in FIG. 6 is registered in a new entry as described above, it is recorded onto the database 21 via the input/output interface 16 and the drive 20. On the other hand, when data in the XML format is registered for modification, the already-existing public metadata on the database 21 is overwritten via the input/output interface 16 and the drive 20.

As described above, user-generated public metadata from many broadcast receiving and recording apparatuses 4 are sent to the server 3 to be registered with the storage unit 13 of the server 3.

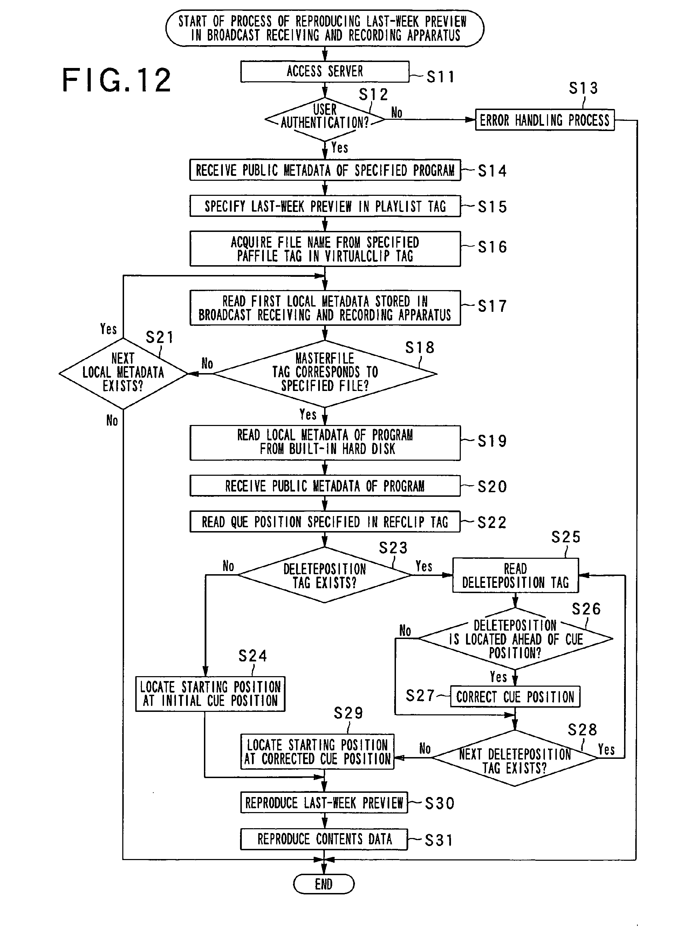

Next, regarding the broadcast receiving and recording apparatus 4, with reference to FIG. 12, a description will be given of a process (a type of special reproduction) of reproducing a last-week preview and after reproducing the preview, reproducing contents data corresponding to the preview.

As shown in FIG. 12, in Step S11, when receiving an instruction to access the server 3 from a user via the input unit 49, the CPU 46 accesses the server 3 via the network I/F 50.

At this time, when being accessed by the broadcast receiving and recording apparatus 4 via the communication unit 19, the server 3 reads out a message window for requesting sending of an ID and a password stored in the storage unit 13 and sends the message window information from the communication unit 19 to the broadcast receiving and recording apparatus 4 via the network 2.

When the network I/F 50 receives from the server 3 the message window information for prompting the user to input the ID and the password, i.e. when a request for sending of an ID and a password is made by the server 3, the CPU 46 displays the message window for prompting the user to input the ID and the password on the monitor 44 to prompt the user to input the data.

Then, when the user of the broadcast receiving and recording apparatus 4 inputs, according to the displayed message, the ID and the password by use of the input unit 49, the ID and the password are input to the CPU 46. Then, the ID and the password are sent to the server 3 by the CPU 46 via the network I/F 50 to enable the server 3 to perform user authentication (Step S12).

Similarly to the above-described process of registering public metadata, the server 3 performs an authentication process according to the ID and the password. If the user is authenticated properly, multiple file names of public metadata and a list of metadata as program recording information of broadcast contents corresponding to the file names are sent to the above broadcast receiving and recording apparatus 4 along with the result of the authentication process. If the user is not authenticated properly, then the result is sent to the above broadcast receiving and recording apparatus 4.

If the authentication is not properly performed in Step S12 (Step S12; NO), then the CPU 46 receives via the network I/F 50 a message that the authentication is not properly performed and then executes an error handling process according to the message (Step S13). Specifically, in this case, the user of the broadcast receiving and recording apparatus 4 cannot acquire public metadata. Consequently, the CPU 46 terminates the process of reproducing the last-week preview.

On the other hand, if the authentication is properly performed in Step S12 (Step S12; YES) , then the CPU 46 receives public metadata 51 specified by the user from the list of public metadata sent by the server 3 and displays the details on the monitor 44 (Step S14).

In Step S14, the user of the broadcast receiving and recording apparatus 4 can select, by use of the input unit 49 such as a cursor, an item of "a last-week preview" from the <PlayListName> tag in the <PlayList> tag of the production control information 55 of the program, which information 55 is displayed on the monitor 44.

Then, when the user specifies, by use of the input unit 49, the "last-week preview" from the <PlayListName> tag (reproduction name) in the <PlayList> tag of the production control information 55 (Step S15), the CPU 46 acquires the file name from the <PAFFile> tag in the <VirtualClip> tag of the material composition information 54 of the public metadata (Step S16).

Specifically, when the material composition information 54 specified in the <ClipOrder> tag (reproduction order) in the <PlayList> tag of the production control information 55 is selected by the user, the <VirtualClip> tag indicating video information regarding other contents data related to the contents data to be reproduced for the special reproduction is read into the selected material composition information 54.

For example, according to the present embodiment, the CPU 46 acquires a file name (xtv_20030615_0930_1000. paf) indicating public metadata of last installment of a serial program and a position of description of clip information indicating video data of the preview in the above public metadata, which file name and position are stored in the <VirtualClip> tag of the material composition information 54.

Then, the CPU 46 reads the local information 59 having a latest date and time stored in the hard disk 36 of the broadcast receiving and recording apparatus 4 (Step S17).

A program information common file name in the <LocalFile> tag of the local information 59 stored in the broadcast receiving and recording apparatus 4 indicates a name of a broadcasting station and a recording date and time, such as "xtv_20030615_0930_1000. paf "; and therefore the CPU 46 reads the local information on order of latest date and time according to this recording date and time information.

Then, the CPU 46 decides whether the <MasterFile> tag of the acquired local information 59 corresponds to the public metadata specified in Step S14 (Step S18). Specifically, the CPU 46 confirms, by use of the <MasterFile> tag (xtv_20030615_0930_1000. paf) of the local information 59, whether the program contents data of the last-week program described in the link information 57 has been recorded on the hard disk 36 or the optical disk 39.

At this time, if the <MasterFile> tag of the local information 59 corresponds to the specified contents metadata (Step S18; YES), this means that the specified last-week program has been recorded on the broadcast receiving and recording apparatus 4. Thus, the CPU 46 reads out the local information 59 of the last-week program stored in the hard disk 36 of the broadcast receiving and recording apparatus 4 (Step S19).

Then, the CPU 46 requests public metadata other than the local information 59 from the server 3 and at the same time receives the public metadata which are sent from the server 3 in response to the request (Step S20).

On the other hand, if the <MasterFile> tag does not correspond to the specified contents metadata (Step S18; NO) , then the CPU 46 decides whether succeeding local information 59 exists (Step S21). If so (Step S21; YES), then the flow returns to the Step S17.

Specifically, the CPU 46 reads the local information regarding the succeeding contents data stored in the hard disk 36 (Step S17). In this way, the CPU 46 sequentially decides whether the <MasterFile> tag of the local information 59 regarding each of the contents data stored in the hard disk 36 corresponds to the specified contents metadata (Step S18).

In this case, if succeeding local information does not exist (Step S21; NO), this means that the last-week program has not been recorded onto the broadcast receiving and recording apparatus 4. Thus, the CPU 46 finishes the preview reproduction process.

As described above, in the processes (Steps S17 to S21) of confirming recording of the last-week program by use of the <MasterFile> tag of the local information 59, it is confirmed whether there is recorded contents data regarding the last-week program specified in the link information 57 by use of the <MasterFile> tag of the local information 59. If so, then the local information and public metadata regarding the contents data of the last-week program is read out. On the other hand, if not, then the reproduction of the last-week preview is not performed.

Specifically, in the processes of confirming recording of the last-week program, it is confirmed whether a file name of metadata specified by the <MasterFile> tag in the local information 59 corresponds to a file name of metadata regarding contents data of the last-week program. If not, succeeding local information is read out and similar operation is performed. On the other hand, if so, then it is found that the contents data regarding the last-week program has been recorded on the broadcast receiving and recording apparatus 4. In this case, the corresponding local information and the public metadata on the server 3 are read out and stored the data into the RAM 48 of the broadcast receiving and recording apparatus 4.

Then, to reproduce the preview data with respect to the contents data of the last-week programby use of the material composition information 54 in the acquired public metadata and the local information 59, the CPU 46 performs the following processes (Steps S22 to S30).

First, a process of correcting a cue position by use of the <DeletePosition> tag of the local information 59 is performed. Specifically, even when a program recorded by a user is edited by deleting a CM or the like and there arises a difference from the public metadata, a correction is made with respect to the part involved by use of the <DeletePosition> tag of the local information 59 to correctly perform the reproduction at the position specified by the public metadata.

Specifically, after receiving the public metadata sent from the server 3 (Step S20) as described above, the CPU 46 reads a cue position specified by the <RefClip> tag in the <VirtualClip> tag of the material composition information 54 (Step S22).

More specifically, the CPU 46 reads out the <RefClip> tag in the <RefPAF> tag in the <VirtualClip> tag of the material composition information 54 to acquire a clip position corresponding to the preview data (video data of the preview) with respect to the contents data of the last-week program. Using this clip position, the CPU 46 locates the starting position of the preview data with respect to the contents data of the last-week program. For example, according to the present embodiment, the CPU 46 locates the starting position of video data indicated by the clip having the file name of xtv_20030615_0930_1000.paf and the order of "6" (Step S22).

Then, the CPU 46 decides whether the local information 59 corresponding to the contents data of the last-week program contains the <DeletePosition> tag (Step S23). If not (Step S23; NO), then the flow proceeds to Step S24 and the CPU 46 locates the starting position at the initial cue position. Specifically, if the <DeletePosition> tag does not exist, this means that the program has been subject to an original editing and that the starting position can be located as specified by the public metadata. Thus, the CPU 46 can appropriately reproduce the preview data at the initial cue position.

On the other hand, if the <DeletePosition> tag exists (Step S23; YES), then the CPU 46 reads the first <DeletePosition> tag (Step S25). Specifically, when the <DeletePosition> tag exists, this means that the last-week program has not been subjected to an original editing and that its cue position is required to be corrected. Therefore, the CPU 46 reads the first <DeletePosition> tag and then performs the following operation.

Then, the CPU 46 decides whether the <DeletePosition> tag is located ahead of the cue position. If so (Step S26; YES), then the cue position is corrected (Step S27). This operation is performed with respect to all the <DeletePosition> tags.

Specifically, the CPU 46 decides whether a succeeding <DeletePosition> tag exists and if so (Step S28; YES), then the flow returns to Step S25 to read the succeeding <DeletePosition> tag. On the other hand, if not (Step S28; NO), then the flow proceeds to Step S29 in which the CPU 46 locates the starting position of the preview part in the last-week program by use of a starting-position locating function of the hardware and then reproduces at the located position the video data indicating the 6^{th} clip of the contents data, or the preview data of the contents data stored in the hard disk 36 or the optical disk 39 (Step S30).

Lastly, after finishing the reproduction of the preview data, the CPU 46 starts reproduction of the contents data according to a user instruction (Step S31). Then, after finishing the reproduction, the CPU 4 6 completes the operation.

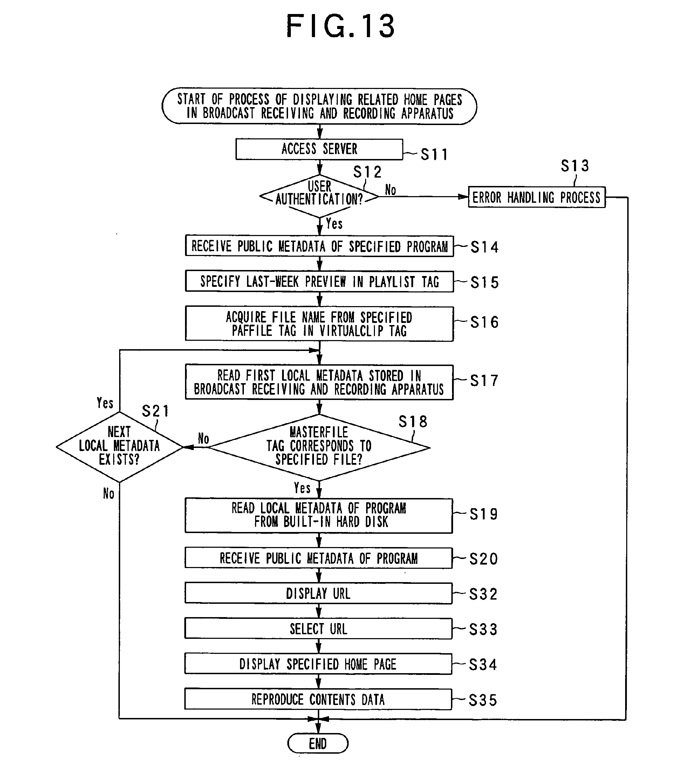

Next, with reference to FIG. 13, a description will be given of a case where after a home page related to contents data to be reproduced is displayed by a user in the broadcast receiving and recording apparatus 4, the contents data is reproduced.

The same Step numerals (Steps S11 to S21) are applied to processes corresponding to FIG. 12, and an explanation thereof is omitted.

After receiving public metadata sent from the server 3 (Step S20) , the CPU 46 reads out a URL related to the contents data to be reproduced on the monitor 44 by a user of the broadcast receiving and recording apparatus 4 from the <LinkURL> tag of the material composition information 54 and displays the URL on the monitor 44 (Step S32).

Then, when the user selects a URL "http://www.mj.co.jp" displayed on the monitor 44 by use of the input unit 49 (Step S33) , the CPU 46 displays the specified home page (Step S34).

In this case, the user can display any of the video data provided by each home page by use of the input unit 49.

Lastly, when the user selects completion of viewing home pages by manipulating the input unit 49, the CPU 46 starts, in response to a user instruction, reproduction of the contents data recorded on the hard disk 36 or the optical disk 39 (Step S35). Then, after finishing the reproduction, the CPU 46 completes the operation.

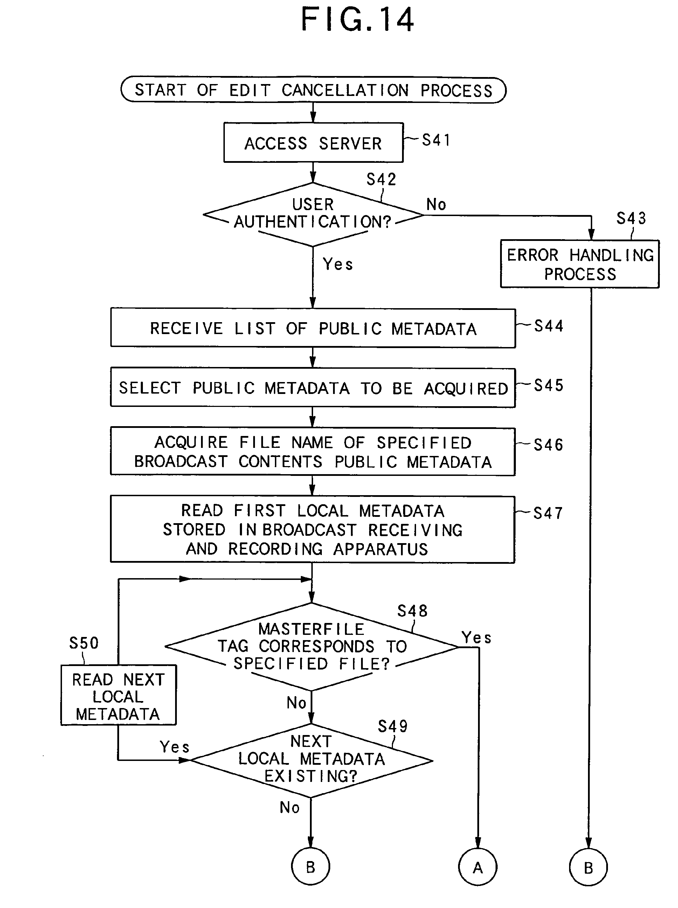

Next, a process of canceling an edit of public metadata corresponding to the contents data to be reproduced in the broadcast receiving and recording apparatus 4 and a process of reproducing the contents data will be described with reference to FIGs. 14 to 17.

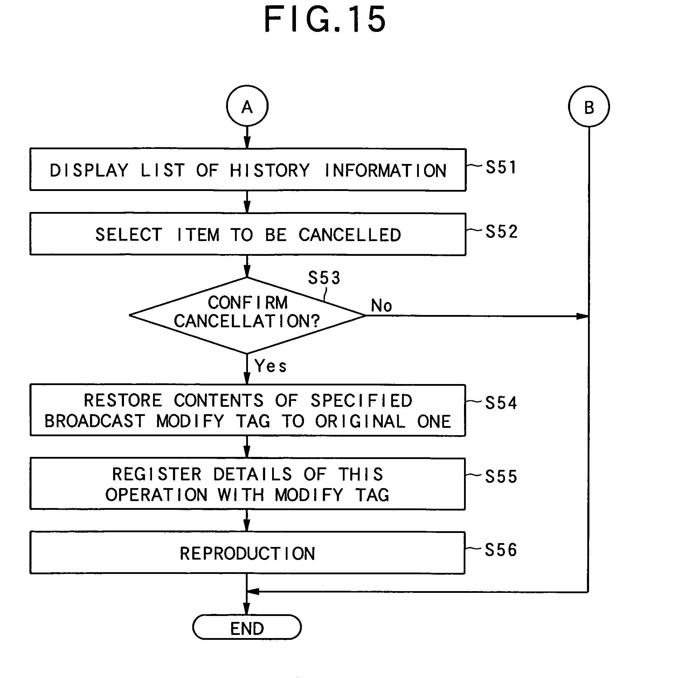

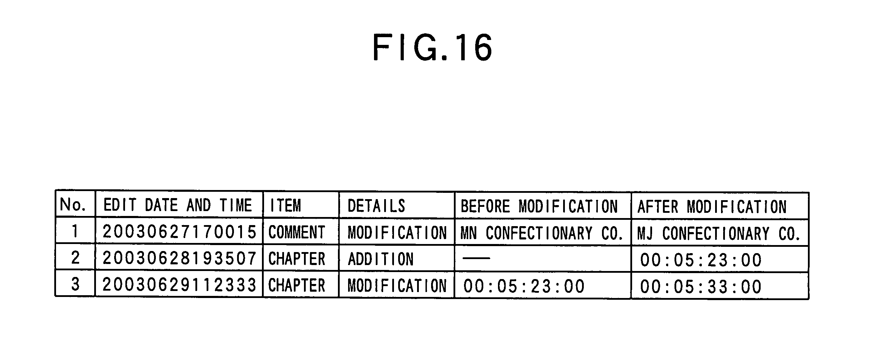

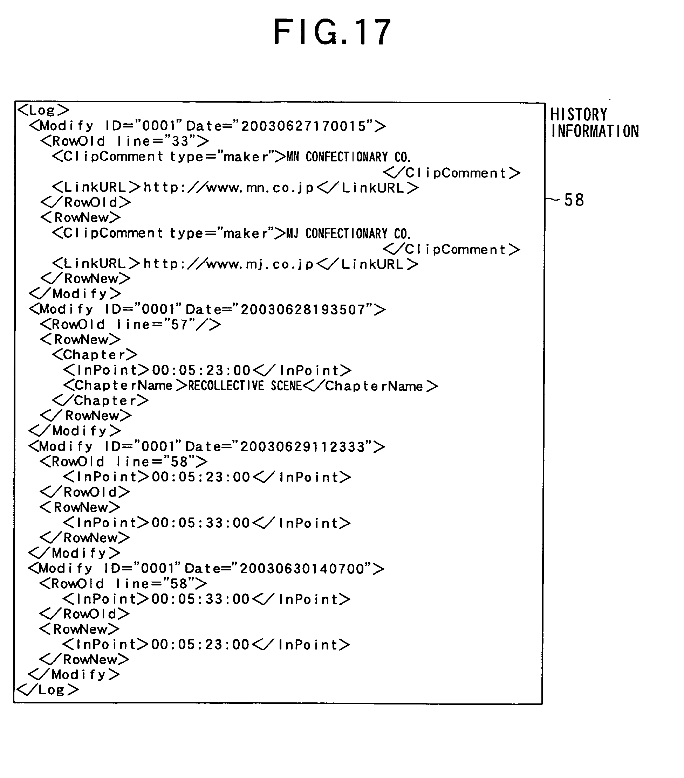

FIG. 14 is a flowchart showing a first process for canceling an edit of public metadata in the broadcast receiving and recording apparatus 4 according to the present invention. FIG. 15 is a flowchart showing a second process for canceling an edit of public metadata in the broadcast receiving and recording apparatus 4 according to the present invention. FIG. 16 is an explanatory diagram showing exemplary displayed history information. FIG. 17 is an explanatory diagram showing details of the history information after modification.

FIGs. 14 and 15 are flowcharts showing a case where a user having a user ID of 0001 cancels a chapter modification No. 3 in the exemplary displayed history information shown in FIG. 16.

As shown in FIG. 14, when an instruction to access the server 3 is input by a user via the input unit 49, the CPU 46 accesses the server 3 via the network I/F 50 (Step S41).

At this time, when the server 3 is accessed via the communication unit 19 by the broadcast receiving and recording apparatus 4, a message window for requesting transmission of an ID and a password stored in the storage unit 13 is read out and then the message window information is sent from the communication unit 19 to the broadcast receiving and recording apparatus 4 via the network 2.

When the network I/F 50 receives the message window information sent from the server 3 for prompting the user to input the ID and the password, i.e. when the server 3 requests the transmission of the ID and the password, the CPU 46 displays the message window for prompting the user to input an ID and a password on the monitor 44 to prompt the user to input the data.

Then, when the user of the broadcast receiving and recording apparatus 4 inputs, in response to this display, the ID and the password by use of the input unit 49, the CPU 46 receives the ID and the password and sends the data to the server 3 via the network I/F 50 to enable the server 3 to perform user authentication (Step S42).

Similarly to the above-described process of registering public metadata, the server 3 performs an authentication process according to the ID and the password. If the user is properly authenticated, multiple file names of public metadata and a list of metadata as program recording information of broadcast contents corresponding to the file names are sent to the above broadcast receiving and recording apparatus 4 along with the result of the authentication process. If the user is not properly authenticated, the result is sent to the above broadcast receiving and recording apparatus 4.

If the authentication is not properly performed in Step S42 (Step S42; NO), then the CPU 46 receives via the network I/F 50 a message that the authentication is not properly performed and then executes an error handling process according to the message (Step S43). Specifically, in this case, the user of the broadcast receiving and recording apparatus 4 cannot acquire public metadata. Consequently, the CPU 46 terminates the process of editing/canceling public metadata via B of FIG. 15.

On the other hand, if the authentication is properly performed in Step S42 (Step S42; YES) , then the CPU 46 receives a list of public metadata sent by the server 3 and displays the public metadata for each genre on the monitor 44 (Step S44).

Specifically, the CPU 46 determines a genre for each of the acquired public metadata based on the <Category> information described in the program recording information 53 of each public metadata and displays the public metadata for each determined genre.

After viewing the displayed details, the user selects one desired public metadata from the list of public metadata by use of the input unit 49 (Step S45). Then, the CPU 4 6 acquires a file name of the selected public metadata (Step S46) and also reads the local information 59 having a latest date and time stored in the hard disk 36 of the broadcast receiving and recording apparatus 4 (Step S47).

A program information common file name in the <LocalFile> tag in the local information 59 stored in the broadcast receiving and recording apparatus 4 indicates a broadcasting station name and a recording date and time, such as "xtv_20030622_0930_1000.lpaf". Thus, the CPU 46 reads the local information on order of latest date and time based on this recording date and time information.

Then, the CPU decides whether the <MasterFile> tag of the acquired local information 59 corresponds to the contents metadata specified in Step S46 (Step S48).

If so (Step S48; YES), then it is decided that the specified program contents data has been recorded on the broadcast receiving and recording apparatus 4. Consequently, the flow proceeds to a process A shown in FIG. 15.

On the other hand, if not (Step S48; NO) , then the CPU 46 decides whether the local information having a date and time next to the latest date and time exists (Step S49). If so (Step S49; YES) , then the CPU 46 reads the local information of succeeding contents data recorded in Step S50 and sequentially decides whether the <MasterFile> tag of the local information 59 with respect to all of the recorded contents data corresponds to the specified contents metadata (StepS48).

If succeeding local information does not exist (Step S49; NO) , then it decided that the specified program contents data has not been recorded in the broadcast receiving and recording apparatus 4. Consequently, the CPU 46 finishes the process of canceling an edit of public metadata via B shown in FIG. 15.

If it is decided in Steps S48 and S49 that the specified program contents data has been recorded, then the CPU 46 receives the public metadata corresponding to the contents data whose edit history sent from the server 3 is to be deleted, and transforms the edit history information of the received public metadata with respect to the contents data into a text file having a predetermined window for displaying modification, thereby displaying the transformed history information on the monitor 44.

Specifically, displayed on the monitor 44 is a window for displaying modification shown in FIG. 16. Edit information displayed in the window includes: a number of a video or audio editing order applied to the contents; an edit date and time for each editing; an item related to the editing, such as a comment, chapter, etc.; edit details, such as a video or audio addition or modification; and video data before and after editing.

Then, when an item to be cancelled is selected from the window for displaying modification shown in FIG. 16 by use of a cursor, etc. of the input unit 49 (Step S52), the CPU 46 displays a confirmation message for canceling an edit of the history information 58 on the monitor 44 and waits for a user selection (Step S53).

For example, if the 3^{rd} chapter shown in FIG. 16 is selected, the CPU 46 decides whether the No. 3 item (chapter modification) of the exemplary edit history shown in FIG. 16 is cancelled.

Specifically, there are three items displayed as the edit history in this example:
(1) MN Confectionary co. is changed to MJ Confectionary co. in the <ClipComment> tag described in the contents data history information 58 at 17:00:15, June 27, 2003 (20030627170015) (edit item No. 1 of FIG. 16);
(2) A chapter having the <Inpoint> tag (broadcasting time of the chapter) of 5 minutes 23 seconds (00:05:23:00) and the <ChapterName> tag of "recollective scene" is added in the <Chapter> indicating a chapter (segment) described in the contents data history information 58 at 19:35:07, June 28, 2003 (20030628193507) (edit item No. 2 of FIG. 16); and
(3) The <Inpoint> tag (broadcasting time of the chapter) described in the contents data history information 58 is changed from 5 minutes 23 seconds (00:05:23:00) to 5 minutes 33 seconds (00:05:33:00) at 11:23:33, June 29, 2003 (20030629112333) (edit item No. 3 of FIG. 16).

When an item is selected for cancellation by use of the input unit 49, the CPU 46 confirms the cancellation of the item.

Regarding the No. 1 edit item shown in FIG. 16, the <LinkURL> tag indicating a URL of contents data is also changed from http://www.mn.co.jp to http://www.mj.co.jp, as shown in FIG. 17.

Then, if the cancellation of the edit item is confirmed, i.e. if the user decides on the cancellation of the selected edit item (Step S53; YES), the CPU 46 restores the edited contents data to an original one with the cancelled edit item removed (Step S54).

For example, if the cancellation of the No. 3 chapter modification is determined as described above (Step S53; YES), then the flow proceeds to Step S54 in which the contents of the specified <Modify> tag are restored to the original ones. Specifically, in the history information 58, the <Inpoint> tag (the broadcasting time of the chapter) which is to be edited and described in the line 58 with respect to the text file of the contents data, is changed from 5 minutes 33 seconds (00:05:33:00) back to 5 minutes 23 seconds (00:05:23:00) at 14:07:00, June 30, 2003 (20030630140700).

In Step S55, as shown in FIG. 17, the CPU 46 registers with the <Modify> tag the information that the broadcasting time of the chapter has been changed back to 5 minutes 23 seconds (00:05:23:00). Consequently, after the modification, the history information 58 becomes the one shown in FIG. 17.

On the other hand, if the No. 3 chapter modification is not determined (step S53; NO), then the CPU 46 completes the operation.

Lastly, the CPU 46 generates the public metadata with respect to the contents data whose edit information has been restored to the original one and at the same time reproduces the contents data based on the public metadata by controlling the hard disk drive controller 34 or the optical disk controller 37 because the contents data is recorded on the hard disk 36 or the optical disk 39 (Step S56). Then, after finishing the reproduction of the contents data, the CPU 46 completes the operation.

In this operation, the public metadata with respect to the contents data whose edit information has been restored to the original one is generated andbased on the publicmetadata thus generated, the contents data is reproduced. However, the generated public metadata may be provided for another broadcast receiving and recording apparatus 4 by registering the generated public metadata with the server 3 using the registering process described above. In this case, the CPU 46 generates the public metadata whose edit information has been restored to the original one and then the operation proceeds to the above registering process.

In the present embodiment, as described above, the broadcast receiving and recording apparatus 4 includes: a hard disk 36 or an optical disk 39 on which contents data and attribute data indicating attributes of the contents data can be recorded; an input unit 49 which selects contents data with respect to which at least one of reproduction and information provision is to be performed; a network I/F 50 which acquires control information regarding the selected contents data, the control information being used to control reproduction and recording of the selected contents data; and a CPU 46 which performs, according to presence of recorded contents data in the hard disk 36 or the optical disk 39, the control information and the attribute data, at least one of reproduction of the contents data, provision of information related to the contents data and provision of history information indicating edit history regarding the contents data.

Accordingly, in the broadcast receiving and recording apparatus 4 of the present embodiment, since the acquisition of public metadata makes it possible to acquire the reproduction control information 55, link information 57 and history information 58 via the network 2 from the server 3, if there is recorded contents data, the reproduction of the contents data base on the reproduction control information 55, the provision of information related to the contents data or the provision of history information indicating edit history regarding the contents data can be performed.

Consequently, regarding contents data provided in a last installment of a serial program such as a serial drama, a user can view video and audio information or home pages related to the program by use of the link information 57 as the related information. In addition, by accessing contents data of other related programs, a user can reproduce only a preview of a serial program such as a serial drama, or by performing digested reproduction, a user can reproduce an outline of a last installment.

In addition, by utilizing the history information 58 for displaying of edit history and restoration of editing details, a user can view edit process and restore edit condition to a previous one. Moreover, when each user sends and receives via the server 3 the history information 58 as public metadata, the edit process can be shared among the users.

According to the present embodiment, base on local metadata recorded on the hard disk 36 or the optical disk 39, the CPU 46 decides whether contents data has been recorded. If it is decided that the contents data has been recorded, the contents data is reproduced based on the public metadata 51.

According to this configuration of the present embodiment, if it is decided that contents data has been recorded, the contents data is reproduced based on the public metadata. Thus, the contents data can be appropriately reproduced based on the reproduction control information.

In addition, according to the present embodiment, based on local metadata recorded on the hard disk 36 or the optical disk 39, the CPU 46 decides whether contents data has been recorded. If it is decided that the contents data has been recorded, the related information with respect to the contents data as well as the contents data is provided.

According to this configuration of the present embodiment, if it is decided that contents data has been recorded, the information related to the contents data as well as the contents data is provided; and therefore, regarding contents data provided in a last installment of a serial program such as a serial drama, a user can view video and audio information or home pages related to the program by use of the link information 57 as the related information. In addition, by accessing contents data of other relatedprograms, a user can reproduce only a preview of a serial program such as a serial drama, or by performing digested reproduction, a user can reproduce an outline of a last installment.

According to the present embodiment, based on local metadata recorded on the hard disk 36 or the optical disk 39, the CPU 46 decides whether contents data has been recorded; and if it is decided that the contents data has been recorded, the monitor 44 presents the edit history of the selected contents data; and the CPU 46 restores the edit item shown in the provided edit history; and the CPU 46 updates the acquired publicmetadata 51 base on the restored edit item and reproduces the contents data based on the public metadata 51 or provides the contents data for another information provision apparatus.

According to this configuration of the present embodiment, the broadcast receiving and recording apparatus 4 can provide the history information 58 for a user; and therefore, by utilizing the history information 58 for displaying of edit history and restoration of editing details, a user can view edit process and restore edit condition to a previous one. Moreover, when each user sends and receives via the server 3 the history information 58 as public metadata, the edit process can be shared among the users.

In addition, according to the present embodiment, if public metadata 51 is encrypted, the user information 52 can be protected and at the same time falsification of the public metadata 51 can be prevented. If rebroadcast information is described in the program recording information 53, useful information can be provided for a user which has failed to record a program.

In the embodiment described above, in a case where a program is recorded onto the optical disk 39, the local information 59 may be recorded not onto the hard disk 36 but onto the optical disk 39 itself. In this case, the local information 59 of the program recorded therein can be easily obtained by inserting the optical disk 39.

In the embodiment described above, a removable recording medium according to the present invetion is applied to the optical disk 39, but the removable recording medium is not restricted to the optical disk. It can be applied to a removable recording medium such as a semiconductor memory or a magnetic memory.

According to the embodiment described above, the inventive apparatus is used to provide broadcast contents. However, the invention can be similarly applied to metadata with respect to video stream on a network or video data on package media. In this case, it is also possible to distribute preliminarily generated metadata along with the video data. Furthermore, the invention can be applied to a system with a built-in hard disk, which is used to record TV broadcast and radio broadcast, such as a DVD (Digital Versatile Disk) recorder with a hard disk, a hard disk recorder, a personal computer with recording functions, etc.

After programs corresponding to the flowcharts shown in FIGs. 11 to 15 are recorded on information recording media such as a flexible disk, a hard disk, etc. or after the programs are acquired via a network such as the Internet and then recorded on recording media, the programs are read out and executed by a general microcomputer, etc. This allows the microcomputer to function as the CPU 46 according to the embodiment.

The invention may be embodied in other specific forms without departing fromthe spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An information provision apparatus (4a to 4c, 4) **characterizing in that** the information provision apparatus (4a to 4c, 4) comprises:
a recording device (36, 39) on which contents data and attribute data indicating attributes of the contents data can be recorded;
a selecting device (49) which selects contents data with respect to which at least any one of reproduction and information provision is to be performed;
an acquiring device (50) which acquires control information used for controlling reproduction and recording of the selected contents data; and
a reproduction and provision device (44, 45, 46) which performs, based on presence of the recorded contents data on the recording device (36, 39), the control information, and the attribute data, at least any one of reproduction of the contents data, provision of related information related to the contents data, and provision of history information indicating edit history regarding the contents data.

2. The information provision apparatus (4a to 4c, 4) according to claim 1, wherein the reproduction and provision device (44, 45, 46) further comprises:
a deciding device (46) which decides, based on the attribute data recorded on the recording device (36, 39), whether the contents data has been recorded on the recording device (36, 39); and
a control device (46) which reproduces the contents data based on the control information if the deciding device (46) decides that the contents data has been recorded on the recording device (36, 39).

3. The information provision apparatus (4a to 4c, 4) according to claim 1, wherein
the reproduction and provision device (44, 45, 46) further comprises a deciding device (46) which decides, based on the attribute data recorded on the recording device (36, 39), whether the contents data has been recorded on the recording device (36, 39), and
the reproduction and provision device (44, 45, 46) provides the contents data and the related information related to the contents data, when the deciding device (46) decides that the contents data has been recorded on the recording device (36, 39).

4. The information provision apparatus (4a to 4c, 4) according to claim 1, wherein the reproduction and provision device (44, 45, 46) further comprises:
a deciding device (46) which decides, based on the attribute data recorded on the recording device (36, 39), whether the contents data has been recorded on the recording device (36, 39);
a presentation device (44) which presents, in response that the deciding device (46) decides that the contents data has been recorded on the recording device (36, 39), the edit history regarding the selected contents data;
a restoration device (46) which restores an edit item indicated in the presented edit history; and
an information provision device (46) which performs reproduction of the contents data based on the control information or provision of the contents data for another information provision apparatus (4a to 4c, 4), after updating the acquired control information based on the restored edit item.

5. The information provision apparatus (4a to 4c, 4) according to any one of claims 1 to 4, wherein the attribute information recorded on the recording device (36, 39) is data which describes predetermined information for identifying the contents data.

6. An information reproducing apparatus (4a to 4c, 4) **characterizing in that** the information reproducing apparatus comprises:
a recording device (36, 39) on which contents data, local metadata which a user uniquely uses among metadata describing predetermined information regarding the contents data, and public metadata except the local metadata among the metadata can be recorded;
a selecting device (49) which selects contents data with respect to which at least any one of reproduction and information provision is to be performed;
an acquiring device (50) which acquires control information regarding the public metadata, the control information being used for controlling reproduction and recording of the selected contents data; and
a reproduction device (46) which performs reproduction of the contents data, based on presence of the recorded contents data on the recording device (36, 39) , the control information, and the local metadata.

7. The information provision apparatus (4a to 4c, 4) according to claim 6, wherein the local metadata recorded on the recording device (36, 39) contains information for correcting difference between the local metadata and the public metadata, when there comes to be the difference between the local metadata and the public metadata by editing the predetermined information of the contents data.

8. The information provision apparatus (4a to 4c, 4) according to claim 6, wherein, when the contents data is recorded on a removable recording medium (39), the local metadata contains information for identifying the removable recording medium (39).

9. An information provision method **characterizing in that** the information provision method comprises the processes of:
recording contents data and attribute data indicating attributes of the contents data;
selecting contents data with respect to which at least any one of reproduction and information provision is to be performed;
acquiring control information used for controlling reproduction and recording of the selected contents data; and
performing, based on presence of the recorded contents data in the recording process, the control information, and the attribute data, at least any one of reproduction of the contents data, provision of related information related to the contents data, and provision of history information indicating edit history regarding the contents data.

10. An information recording medium on which an information provision program for providing contents data is recorded so as to be readable through a computer, the information provision program **characterizing in that** the information provision program enables the computer to function as:
a recording device (36, 39) on which contents data and attribute data indicating attributes of the contents data can be recorded;
a selecting device (49) which selects contents data with respect to which at least any one of reproduction and information provision is to be performed;
an acquiring device (50) which acquires control information used for controlling reproduction and recording of the selected contents data; and
a reproduction and provision device (44, 45, 46) which performs, based on presence of the recorded contents data on the recording device (36, 39), the control information and the attribute data, at least any one of reproduction of the contents data, provision of related information related to the contents data, and provision of history information indicating edit history regarding the contents data.
